# EUROPEAN PATENT APPLICATION

(11) **EP 4 772 056 A1**
(43) Date of publication of application: **08.07.2026**
(21) Application number: 24849519.4
(22) Date of filing: 26.07.2024
(51) Int. Cl.: A24F 40/95, A24F 40/40, A24F 40/42, A24F 40/46, A24F 40/90

(54) **AEROSOL-GENERATING DEVICE**

(30) Priority: 01.08.2023 KR 20230100361; 13.12.2023 KR 20230181154
(71) Applicant: KT&G Corporation, Daedeok-gu Daejeon 34337 (KR)
(72) Inventor: WOO, Young Min, Hwaseong-si, Gyeonggi-do 18391 (KR); KIM, Jae Hyuk, Seoul 06352 (KR); PARK, Sang Cheol, Suwon-si, Gyeonggi-do 16469 (KR); SEO, Jang Won, Daejeon 34023 (KR); LEE, Won Kyeong, Guri-si, Gyeonggi-do 11920 (KR); JANG, Chul Ho, Bucheon-si, Gyeonggi-do 14725 (KR); JUNG, Jin Chul, Daejeon 34079 (KR); HAN, Dae Nam, Seoul 06331 (KR)
(74) Representative: Ter Meer Steinmeister & Partner
(86) International application number: PCT/KR2024/010951
(87) International publication number: WO 2025/028950

(57) **Abstract**

An aerosol generating device according to an embodiment may include a main body including a battery accommodation space, a battery detachably coupled to the battery accommodation space, a first terminal arranged in the battery accommodation space, the first terminal being electrically connected to the battery when the battery is coupled to the battery accommodation space, and a first sealing member arranged to surround the first terminal and configured to prevent introduction of external impurities into the first terminal, wherein the battery may include a battery terminal and a battery sealing member, the battery terminal being in contact with the first terminal and the battery sealing member surrounding the battery terminal, the first sealing member may include a movable first cover, and the battery sealing member may include a movable second cover.

## Description

### Technical Field

Embodiments relate to an aerosol generating device including a detachable battery.

### Background Art

Recently, there has been an increasing demand for alternative methods that reduce disadvantages of general cigarettes. For example, there has been an increasing demand for a device (or an "aerosol generating device") that generates an aerosol by heating an aerosol generating material (or an "aerosol generating article") by using the aerosol generating device, instead of a method of generating an aerosol by burning a cigarette.

The aerosol generating device may include a battery for supplying power and a heater generating heat when power is supplied thereto and may generate an aerosol by heating an aerosol generating material through the heater. In particular, the aerosol generating device may use an integral battery for the minimization of a device. However, recently, research into an aerosol generating device using a detachable battery in order to increase user's convenience has been actively conducted.

### Disclosure of Invention

### Technical Problem

A battery of an aerosol generating device may be damaged or have deteriorated performance, due to exposure to external impurities, such as moisture, dust, and the like. The battery of the aerosol generating device may be separated from the aerosol generating device for charging or replacement and may thus be exposed to danger caused by the external impurities. Also, even when the battery of the aerosol generating device is accommodated in the aerosol generating device, the external impurities may penetrate into an accommodation space of the battery, through a gap of the aerosol generating device. Thus, the battery of the aerosol generating device may still be exposed to the danger caused by the external impurities.

Various embodiments of the present disclosure have the objective of protecting a battery of an aerosol generating device from external impurities to prevent damage to and/or malfunction of the battery and the aerosol generating device.

The problems to be solved through the embodiments of the present disclosure are not limited to the problems described above, and problems not mentioned can be clearly understood by a person having ordinary skill in the art to which the embodiments belong from this specification and the attached drawings.

### Solution to Problem

An aerosol generating device according to an embodiment may include a main body including a battery accommodation space, a battery detachably coupled to the battery accommodation space, a first terminal arranged in the battery accommodation space, the first terminal being electrically connected to the battery when the battery is coupled to the battery accommodation space, and a first sealing member arranged to surround the first terminal and configured to prevent introduction of external impurities into the first terminal, wherein the battery may include a battery terminal and a battery sealing member, the battery terminal being in contact with the first terminal and the battery sealing member surrounding the battery terminal, the first sealing member may include a movable first cover, and the battery sealing member may include a movable second cover.

### Advantageous Effects of Invention

An aerosol generating device according to various embodiments of the present disclosure may prevent the introduction of external impurities into a battery terminal and a terminal provided in a main body electrically connected to the battery terminal, thereby preventing, in advance, damage to and malfunction of a battery and the aerosol generating device.

An aerosol generating device according to various embodiments of the present disclosure may prevent the introduction of external impurities into a heater terminal and a terminal provided in a main body electrically connected to the heater terminal, thereby preventing, in advance, damage to and malfunction of a heater and the aerosol generating device.

According to an embodiment, an aerosol generating device includes a housing including an insertion hole into which an aerosol generating article is inserted and the heater assembly for heating the aerosol generating article inserted through the insertion hole.

### Brief Description of Drawings

FIG. 1 is a perspective view of an aerosol generating device according to an embodiment.
FIGS. 2A to 2E are various examples for describing components of the aerosol generating device of FIG. 1.
FIG. 3 is an exploded perspective view of some components of an aerosol generating device according to an embodiment.
FIG. 4 is an exploded perspective view of some elements of an aerosol generating device according to another embodiment.
FIG. 5A is a view for describing a first sealing member of FIG. 3, according to an embodiment.
FIG. 5B is a view for describing a state in which the first sealing member of FIG. 3 is closed, according to another embodiment.
FIG. 5C is a view for describing a state in which the first sealing member of FIG. 5B is open.
FIG. 6A is a view for describing a first sealing member of FIG. 4, according to an embodiment.
FIG. 6B is a view for describing a state in which the first sealing member of FIG. 4 is closed, according to another embodiment.
FIG. 6C is a view for describing a state in which the first sealing member of FIG. 6B is open.
FIG. 7A is a view illustrating a state before a battery and a battery cover of FIG. 3 are coupled to a battery accommodation space.
FIG. 7B is a view illustrating a state after the battery and the battery cover of FIG. 3 are coupled to the battery accommodation space.
FIG. 8A is a view illustrating a state before a battery and a battery cover of FIG. 4 are coupled to a battery accommodation space.
FIG. 8B is a view illustrating a state after the battery and the battery cover of FIG. 4 are coupled to the battery accommodation space.
FIG. 9 is a view for describing a second sealing member according to an embodiment and a heater sealing member according to an embodiment.
FIG. 10 is a block diagram of an aerosol generating device according to another embodiment.

### Best Mode for Carrying out the Invention

An aerosol generating device according to an embodiment includes a main body including a battery accommodation space, a battery detachably coupled to the battery accommodation space, a first terminal arranged in the battery accommodation space, the first terminal being electrically connected to the battery when the battery is coupled to the battery accommodation space, and a first sealing member arranged to surround the first terminal and configured to prevent introduction of external impurities into the first terminal, wherein the battery includes a battery terminal and a battery sealing member, the battery terminal being in contact with the first terminal and the battery sealing member surrounding the battery terminal, the first sealing member includes a movable first cover, and the battery sealing member includes a movable second cover.

The first cover is arranged to close the first sealing member at a first position and open the first sealing member at a second position to expose the first terminal.

The second cover is arranged to close the battery sealing member at a first position and open the battery sealing member at a second position to expose the first terminal.

A battery cover arranged at an area of the main body and configured to open or close the battery accommodation space is further included.

The battery cover includes an external battery cover forming an external surface of the battery cover, an internal battery cover formed at a center of an internal surface of the battery cover, the internal battery cover configured to pressurize the battery toward the main body when the battery is coupled to the battery accommodation space, and a protrusion arranged along an edge of the internal surface of the battery cover.

The main body further includes a groove into which the protrusion is inserted when the battery cover is coupled to the main body.

The main body further includes an elastic member located between the protrusion and the groove when the protrusion is coupled to the groove, the elastic member being configured to prevent introduction of external impurities into the battery accommodation space.

A heater configured to heat an aerosol generating material, according to an embodiment, is further included. The main body further includes a second terminal and a second sealing member, the second terminal being electrically connected to the heater and the second sealing member being arranged to surround the second terminal and configured to prevent introduction of external impurities into the second terminal.

The second sealing member includes a movable third cover.

The third cover is arranged to close the second sealing member at a first position and open the second sealing member at a second position to expose the second terminal.

The heater includes a heater terminal and a heater sealing member, the heater terminal being in contact with the second terminal and the heater sealing member surrounding the heater terminal.

The heater sealing member includes a movable cover.

### Mode for the Invention

The terms used in the examples are selected from commonly used terms as much as possible while considering the functions in the present examples, but these may vary depending on the intention of engineers working in the field, precedents, the emergence of new technologies, etc. Additionally, in certain cases, there are terms arbitrarily selected by the applicant, and in such cases, their meanings will be described in detail in the description of the relevant invention. Therefore, the terms used in this disclosure should be defined based on the meaning of the terms and the overall content of the present invention, rather than simply the names of the terms.

When a part of the specification is said to "include" a component, this does not mean that it excludes other components, but rather that it may include other components, unless otherwise specifically stated. In addition, terms such as "-part" and "-module" described in the specification mean a unit that processes at least one function or operation, which may be implemented as hardware or software, or as a combination of hardware and software.

Also, in describing the embodiments disclosed in this specification, detailed descriptions of well-known technologies may be omitted if it is determined that they could obscure the essence of the embodiments disclosed herein. Additionally, the accompanying drawings are provided merely to facilitate the understanding of the embodiments disclosed in this specification, and the technical concept disclosed herein is not limited by the drawings. It should be understood that all modifications, equivalents, and substitutes that fall within the scope of this disclosure are included.

Terms including ordinal numbers, such as first, second, etc., may be used to describe various components, but the components are not limited by the terms. The above terms are used solely to distinguish one component from another.

When a component is referred to as being "connected" or "coupled" to another component, it should be understood that the component may be directly connected or coupled to the other component, or there may be intervening components in between. On the other hand, when a component is referred to as being "directly connected" or "directly coupled" to another component, it should be understood that there are no intervening components in between.

Singular expressions include plural expressions unless the context clearly indicates otherwise.

Below, with reference to the attached drawings, an embodiment of the present disclosure is described in detail so that a person having ordinary knowledge in the technical field to which the present disclosure belongs can easily implement the present disclosure. However, the present disclosure can be implemented in various different forms and is not limited to the embodiments described herein.

Hereinafter, embodiments disclosed in this specification will be described in detail with reference to the accompanying drawings, and identical or similar components will be assigned the same reference numbers, regardless of the drawing symbols, and redundant explanations will be omitted.

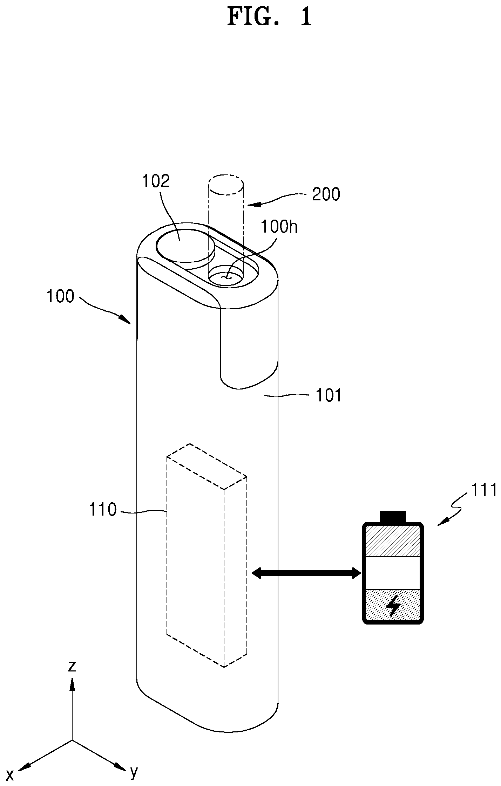

FIG. 1 is a perspective view of an aerosol generating device according to an embodiment.

An aerosol generating device 100 may generate and provide an aerosol.

Referring to FIG. 1, the aerosol generating device 100 according to an embodiment may include a housing 101. The housing 101 may form the general exterior of the aerosol generating device 100, and a space may be provided in the housing 101. Various components configured to generate and provide an aerosol may be arranged in the housing 101.

The housing 101 may include an accommodation space 100h into which an aerosol generating article 200 is inserted, a slider 102 configured to open or close the accommodation space 100h, and a battery accommodation space 110 in which a battery 111 is accommodated.

The accommodation space 100h may provide a space which the aerosol generating article 200 may be detachably inserted into (or "coupled to"). The aerosol generating article 200 may include an aerosol generating material heated by a heater to generate an aerosol. The accommodation space 100h may provide an open space toward the outside of the housing 101, so that the aerosol generating article 200 may be inserted into the open space.

The accommodation space 100h may be recessed toward the inside of the housing 101, so that at least a portion of the aerosol generating article 200 may be inserted into the accommodation space 100h. The depth by which the accommodation space 100h is recessed may correspond to the length of a portion of the aerosol generating article 200, the portion including an aerosol generating material and/or substrate. A portion of the aerosol generating article 200 may be inserted into the housing 101, and the other portion of the aerosol generating article 200 may protrude toward the outside of the housing 101. A user may have, in his/her mouth, a portion of the aerosol generating article 200, the portion being exposed toward the outside of the housing 101, and may suck in air including an aerosol.

The slider 102 may open or close the accommodation space 100h. The slider 102 may be movably arranged in the housing 101 and may expose the accommodation space 100h to the outside of the aerosol generating device 100 or may cover the accommodation space 100h not to expose the accommodation space 100h to the outside of the aerosol generating device 100. The slider 102 may open the accommodation space 100h, while the slider 102 is being located in a first area of the housing 101, and the aerosol generating article 200 may be inserted into the open accommodation space 100h. The slider 102 may move from the first area to a second area of the housing 101 to close the accommodation space 100h. The slider 102 may be located in the second area of the housing 101 and may prevent the accommodation space 100h from being exposed to the outside, and thus, the accommodation space 100h may be protected from external shocks or external impurities.

The battery accommodation space 110 may accommodate the battery 111 configured to supply power to a heater configured to heat the aerosol generating article 200. The battery accommodation space 110 may be formed at a side (e.g., the side toward a +x axis) of the housing 101 and may accommodate the battery 111. The location in which the battery accommodation space 110 is formed is not limited thereto, and the battery accommodation space 110 may be formed in an inner area of the housing 101.

The battery 111 may be detachably coupled to the battery accommodation space 110 and may supply power for operations of components of the aerosol generating device 100. The battery 111 accommodated in the battery accommodation space 110 may be coupled to the battery accommodation space 110 and may be electrically connected to the components (e.g., the heater or a processor) of the aerosol generating device 100. The battery accommodation space 110 may include a terminal to be electrically connected to the battery 111, and the battery 111 may include a terminal to supply power to the aerosol generating device 100 through the terminal provided in the battery accommodation space 110. The battery 111 may supply power for the components of the aerosol generating device 100 to operate, through the terminal provided in the battery 111 and the terminal provided in the battery accommodation space 110.

The battery 111 may be charged in a state in which the battery 111 is attached to the battery accommodation space 110 and/or a state in which the battery 111 is detached from the battery accommodation space 110. While the battery 111 is being accommodated in the battery accommodation space 110, the aerosol generating device 100 may be electrically connected to an external charger, and power supplied from the external charger may be supplied to the battery 111 through the terminal provided in the battery accommodation space 110 and the terminal provided in the battery 111, so that the battery 111 may be charged. The method of charging the battery 111 is not limited thereto. The battery 111 may be detached from the battery accommodation space 110 and may be connected to the external charger or accommodated in the external charger separately from the aerosol generating device 100 The battery 111 may be charged by receiving power from the external charger through the terminal provided in the battery 111.

The chemical and/or physical properties of the battery 111 may deteriorate over use. For example, the more the battery 111 is used, the internal resistance of the battery 111 may increase, so that the available capacitance of the battery 111 may be reduced. The battery 111 that is expired may need to be replaced by the battery 111 that is new, according to a certain cycle. The expired battery 111 may be manually and/or automatically detached from the aerosol generating device 100, and the new battery 111 may be newly attached to the aerosol generating device 100.

Although not shown, the aerosol generating device 100 may further include a battery cover detachably coupled to the housing 101 to protect the battery 111. While the battery cover is being detached from the housing 101, at least portions of the battery accommodation space 110 and the battery may be exposed to the outside of the aerosol generating device 100. Through the open battery accommodation space 110, the expired battery 111 may be replaced by the new battery 111. The battery cover may be attached to the housing 101 to close the battery accommodation space 110. The battery 111 accommodated in the closed battery accommodation space 110 may be protected from external impurities and may be fixed in the battery accommodation space 110 through the battery cover. The aerosol generating device 100 may further include a fixing member arranged in the battery accommodation space 110 and/or the battery cover and configured to fix the battery 111 in the battery accommodation space 110. In the aerosol generating device 100, the battery 111 may be fixed in the battery accommodation space 110 by using the fixing member. Thus, the battery 111 may be prevented from being easily separated from the aerosol generating device 100 by external physical shocks.

When the battery 111 is exposed to water, an electric circuit provided in the battery 111 may be shorted, and thus, the battery 111 may be damaged. Also, when the battery 111 is exposed to external impurities such as dust, etc., electrical connection between the battery 111 and the aerosol generating device 100 may be weakened. The damage to and/or performance deterioration of the battery 111 may be directly connected to the damage to and/or performance deterioration of the aerosol generating device 100. The present disclosure aims to provide an aerosol generating device which may protect the battery 111 from external water and/or dust.

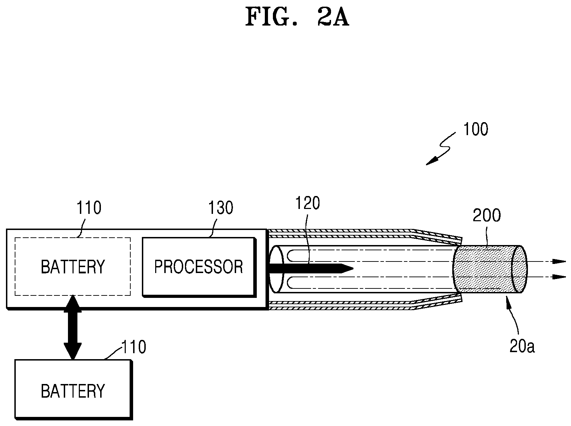

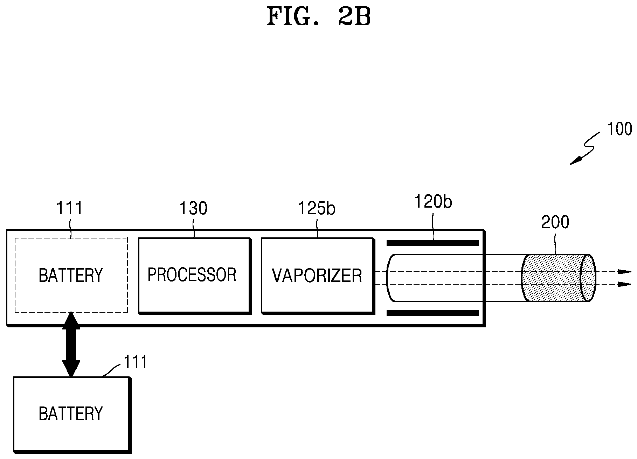

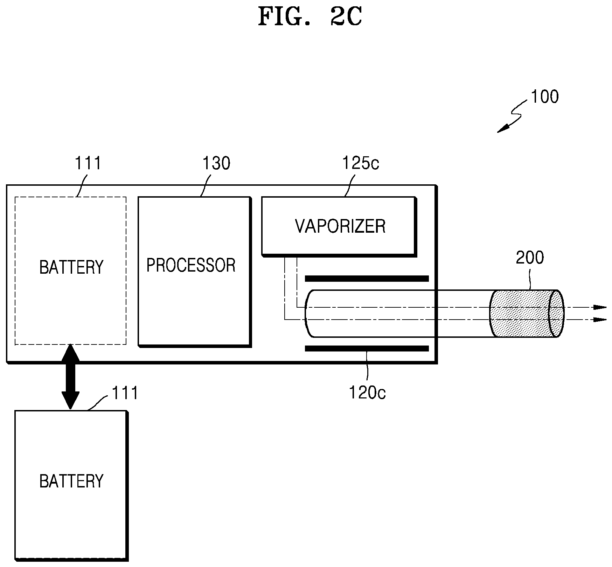

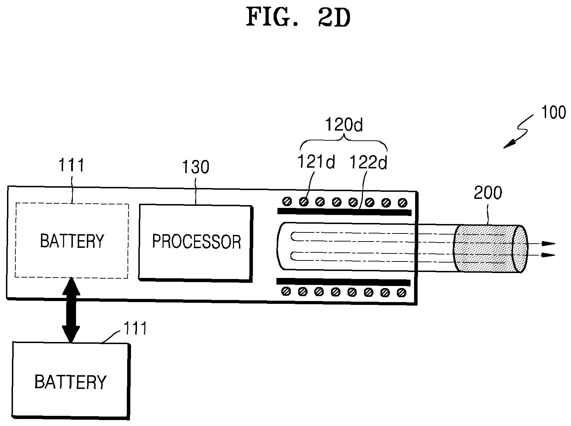

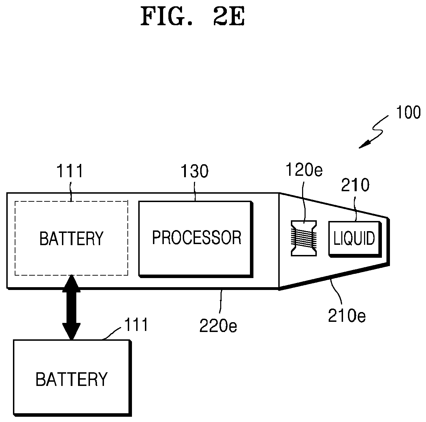

FIGS. 2A to 2E are various examples for describing components of the aerosol generating device of FIG. 1. Referring to FIGS. 2A to 2E, the aerosol generating device 100 may include the battery 111, a processor 130, and heaters 120a to 120e. The components of the aerosol generating device 100 may be the same or substantially the same as at least one of the components of the aerosol generating device 100 of FIGS. 1 and 2. Hereinafter, the same descriptions are omitted.

The aerosol generating device 100 may be realized in various ways. For example, the aerosol generating device 100 may use an electrical resistance heating method or an induction heating method. As another example, the aerosol generating device 100 may be realized to further include a vaporizer or a cartridge. In the aerosol generating device 100 of FIGS. 2A to 2E, the components related to embodiments of the present disclosure are illustrated, and it may be obviously understood by one of ordinary skill in the art that components other than the components illustrated in FIGS. 2A to 2E may further be included in the aerosol generating device 100.

FIG. 2A is a view for describing the aerosol generating device 100 using an electrical resistance method, according to an embodiment. Referring to FIG. 2A, the aerosol generating device 100 may include the battery 111, the heater 120a, and the processor 130.

The aerosol generating article 200 may be inserted into an accommodation space (e.g., the accommodation space 100h of FIG. 1) in the aerosol generating device 100. When the aerosol generating article 20 is inserted into the aerosol generating device 100, the aerosol generating device 100 may heat the aerosol generating article 200 by using the heater 120a to generate an aerosol from the aerosol generating article 200. The generated aerosol may be delivered to a user by passing through the aerosol generating article 200, and thus, the user may smoke the aerosol generating article 20.

The heater 120a may be heated by power supplied from the battery 111. The heater 120a may include an electrical resistance heater. For example, the heater 120a may include an electrically conductive track, and when currents flow through the electrically conductive track, the heater 120a may be heated.

The electrically conductive track of the heater 120a may be formed of an electrically resistive material, and thus, a heating temperature may be determined according to consumed power of the resistance, and a resistance value of the electrically conductive track may be set based on consumed power of the resistance of the electrically conductive track. The resistance value of the electrically conductive track may be variously set according to the material, length, width, thickness, pattern, or the like of the electrically resistive material.

The internal resistance of the electrically conductive track may increase as the temperature increases, based on the resistive temperature coefficient characteristic. For example, in a certain temperature section, the temperature of the electrically conductive track may be proportional to the resistance of the electrically conductive track. By using this principle, the heater 120a manufactured by including the electrically conductive track may heat the aerosol generating article 200 through the electrically resistive method.

The electrically conductive track may be formed of tungsten, gold, platinum, silver, copper, nickel, palladium, or a combination thereof. Also, the electrically conductive track may be doped with an appropriate doping material and may include an alloy.

The heater 120a may be manufactured to have various shapes including a tube shape, a plate shape, a needle shape, a rod shape, etc. Also, the heater 120a may be arranged in a plural number. The heater 120a may be inserted into the aerosol generating article 200 and may be used for an inner heating method to heat the inside of the aerosol generating article 200.

The battery 111 may be separated from or mounted on the aerosol generating device 100, and when the battery 111 is attached to the aerosol generating device 100, power may be supplied from the battery 111 to the heater 120a for a heating operation of the heater 120a to control the temperature of the electrically conductive track.

The processor 130 may control the power supplied to the heater 120a to control the heating operation of the heater 120a. For example, the processor 130 may control, according to a temperature profile, the temperature by which the aerosol generating article 20 is heated by the heater 120a.

FIGS. 2B and 2C are views for describing the aerosol generating device 100 additionally including vaporizers 125b and 125c, according to an embodiment. Referring to FIGS. 2B and 2C, the aerosol generating device 100 may correspond to the aerosol generating device 100 of FIG. 2A further including the vaporizers 125b and 125c.

FIG. 2B illustrates that the vaporizer 125b and the heater 120b are arranged in series, while FIG. 2C illustrates that the vaporizer 125c and the heater 120c are arranged in parallel. That is, according to the arrangement of the vaporizers 125b and 125c, the aerosol generating device 100 may vary.

The heaters 120b and 120c may be heated by power supplied from the battery 111. The heaters 120b and 120c may include electrically resistive heaters and may include, for example, an electrically conductive track.

Unlike the heater 120a of FIG. 2A, the heaters 120b and 120c of FIGS. 2B and 2C may be realized as an external heating method, whereby the heaters 120b and 120c are arranged at the outer circumference of the aerosol generating article 200 and heat an outer surface of the aerosol generating article 200.

The vaporizers 125b and 125c may generate an aerosol by heating a liquid composition, and the generated aerosol may be delivered to a user by passing through the aerosol generating article 200. That is, the aerosol generated by the vaporizers 125b and 125c may be transported along an air flow path of the aerosol generating device 100, and through the air flow path, the aerosol generated by the vaporizers 125b and 125c may pass through the aerosol generating article 200 to be delivered to the user.

The vaporizers 125b and 125c may include a liquid storage, a liquid delivery element, and a heating element (or a vaporizing element). However, each of the liquid storage, the liquid delivery element, and the heating element may be a separate module and may be arranged in other locations of the aerosol generating device 100, rather than being located in the vaporizers 125b and 125c.

The liquid storage may store a liquid composition. For example, the liquid composition may include a liquid including a tobacco-containing material including a volatile tobacco-flavor ingredient or a liquid including a non-tobacco material. The liquid storage may be manufactured to be attached to/detached from the vaporizers 125b and 125c or may be integrally manufactured with the vaporizers 125b and 125c. For example, the liquid composition may include water, a solvent, ethanol, a plant extract, a spice, a flavor, or a vitamin mixture. In addition, the liquid composition may include an aerosol forming agent such as glycerin and propylene glycol.

The liquid delivery element may deliver the liquid composition of the liquid storage to the heating element. For example, the liquid delivery element may be a wick such as cotton fiber, ceramic fiber, glass fiber, or porous ceramic, but is not limited thereto.

The heating element included in the vaporizers 125b and 125c may be an element to heat (vaporize) the liquid composition delivered by the liquid delivery element. For example, the heating element may be a metal heating wire, a metal hot plate, a ceramic heater, or the like, but is not limited thereto. In addition, the heating element may include a conductive filament such as nichrome wire and may be positioned as being wound around the liquid delivery element. The heating element may be heated by a current supply and may transfer heat to the liquid composition in contact with the heating element, thereby heating the liquid composition. As a result, an aerosol may be generated. Thus, the vaporizers 125b and 125c may also be referred to by other terms such as "cartomizer" or "atomizer."

The battery 111 may be separated from or mounted on the aerosol generating device 100, and when the battery 111 is mounted on the aerosol generating device 100, power may be supplied from the battery 111 to the heaters 120b and 120c and the vaporizers 125b and 125c for heating operations of the heaters 120b and 120c and the vaporizers 125b and 125c.

The processor 130 may control the power supplied to the heaters 120b and 120c and the vaporizers 125b and 125c to control the heating operations of the heaters 120b and 120c and the vaporizers 125b and 125c. For example, the processor 130 may control, according to a temperature profile, the temperature by which the aerosol generating article 200 is heated by the heaters 120b and 120c and the vaporizers 125b and 125c.

FIG. 2D is a view for describing the aerosol generating device 100 using an induction heating method according to an embodiment. Referring to FIG. 2D, the aerosol generating device 100 may include a heater 120d including a coil 121d and a susceptor 122d, the battery 111, and the processor 130.

The aerosol generating device 100 may generate an aerosol by heating the aerosol generating article 200 accommodated in the aerosol generating device 100 by using an induction heating method. The induction heating method may denote a method of making a magnetic material emit heat, by applying an alternating magnetic field, the direction of which cyclically changes, to the magnetic material emitting heat via an external magnetic field. Thus, the aerosol generating device 100 may make the magnetic material emit heat energy, by applying the alternating magnetic field to the magnetic material, and may deliver the heat energy emitted from the magnetic material to the aerosol generating article 200 to heat the aerosol generating article 200. Here, the magnetic material emitting heat through the external magnetic field may be the susceptor 122d. The susceptor 122d be provided in the aerosol generating device 100. Alternatively, the susceptor 122d may be provided in the aerosol generating article 200 as the shape of a piece, a flake, a strip, or the like, rather than being not included in the aerosol generating device 100.

The susceptor 122d may include a ferromagnetic substance. For example, the material of the susceptor 122d may include metal or carbon. The material of the susceptor 122d may include at least one of ferrite, a ferromagnetic alloy, stainless steel, and aluminum (Al). Also, the material of the susceptor 122d may include at least one of ceramic, such as graphite, zirconia, or the like, a transition metal, such as nickel (Ni), cobalt (Co), or the like, and a metalloid, such as boron (B), phosphorus (P), or the like.

The aerosol generating device 100 may accommodate the aerosol generating article 200. A space to accommodate the aerosol generating article 200 may be formed in the aerosol generating device 200d. The susceptor 122d may be arranged on the circumference of the space accommodating the aerosol generating article 200. For example, the susceptor 122d may have a cylindrical shape surrounding the outside of the aerosol generating article 200. Thus, when the aerosol generating article 200 is accommodated in the aerosol generating device 200d, the aerosol generating article 200 may be accommodated in the accommodation space of the susceptor 122d, and the susceptor 122d may be arranged at a location surrounding at least a portion of an outer surface of the aerosol generating article 200. However, the shape of the susceptor 122d is not limited thereto and may vary.

The heater 120d may use an induction heating method, and the heater 120d may heat the aerosol generating article 200 accommodated in the aerosol generating device 100, by using the susceptor 122d emitting heat through an external magnetic field generated by the coil 121d.

The coil 121d may be arranged to be wound along an outer surface of the susceptor 122d and may apply an alternating magnetic field to the susceptor 122d. When power is supplied to the coil 121d from the aerosol generating device 100, a magnetic field may be formed in an inner area of the coil 121d. When an alternating current is applied to the coil 121d, the direction of the magnetic field formed in the inner area of the coil 121d may constantly change. When the susceptor 122d is located in the inner area of the coil 121d and exposed to the alternating magnetic field, the direction of which cyclically changes, the susceptor 122d may emit heat and a cigarette accommodated in the susceptor 122d may be heated. The shape of the coil 121d may include a cylindrical shape wrapped in a lengthwise direction of the aerosol generating article 200, but is not limited thereto. The coil 121d may be realized as various types, such as a planar coil, etc.

The battery 111 may be detached from or mounted on the aerosol generating device 100, and when the battery 111 is mounted on the aerosol generating device 100, the battery 111 may supply power, for example, to the coil 121d for the heating operation of the heater 120d.

The processor 130 may control the power supplied to the coil 121d to control the heating operation of the heater 120d. For example, the processor 130 may adjust the intensity of the magnetic field induced by the coil 121d according to the temperature profile, and thus, may control the temperature by which the aerosol generating article 200 is heated according to the induction heating of the susceptor 122d.

FIG. 2E is a view for describing the aerosol generating device 100 including a cartridge 210e replaceable and containing an aerosol generating material 210, according to an embodiment.

The aerosol generating device 100 of FIG. 2E may include the cartridge 210e containing the aerosol generating material 210 and a body 220e for supporting the cartridge 210e. The positions of the hardware components included in the aerosol generating device 100 of FIG. 1 may be divided into the body 220e and the cartridge 210e.

The cartridge 210e may be coupled to the body 220e, while the aerosol generating material 210 is being accommodated in the cartridge 210e. With a portion of the cartridge 210e inserted into a receptacle of the body 220e, the cartridge 210e may be mounted on the body 220e.

The cartridge 210e may contain the aerosol generating material 210 including a liquid composition, but is not limited thereto and may contain the aerosol generating material 210 in the state of any one of a solid, a gas, or a gel. For example, the liquid composition may include a liquid including a tobacco-containing material including a volatile tobacco-flavor component or a liquid including a non-tobacco material.

The heater 120e included in the cartridge 210e may perform a heating operation via an electric signal or a wireless signal transmitted from the body 220e. Thus, the aerosol generating material 210 in the cartridge 210e may be vaporized by the heating of the heater 120e, and thus, an aerosol may be generated.

The heater 120e may be realized as a conductive filament including a metal material, such as copper, nickel, tungsten, or the like, or a ceramic heating material, in order to heat, by generating heat via electrical resistance, the aerosol generating material delivered to the liquid delivery element, and may be wound along the liquid delivery element or arranged to be adjacent to the liquid delivery element.

The battery 111 may be detached from or mounted on the aerosol generating device 100, and when the battery 111 is mounted on the aerosol generating device 100, power may be supplied from the battery 111 to the heater 120a for a heating operation of the heater 120e.

The processor 130 may control the power supplied to the heater 120e to control the heating operation of the heater 120e. For example, the processor 130 may control, according to a temperature profile, the temperature by which the aerosol generating material 210 is heated by the heater 120a.

The aerosol generating device 100 may be realized as at least one of the aerosol generating devices 100 of FIGS. 2A to 2E, but is not necessarily limited thereto and may be realized as other ways.

The aerosol generating devices 100 of FIGS. 2A to 2E may commonly use the battery 111 detachably coupled to the aerosol generating device 100 as a power supply source. The battery 111 may be detached from the aerosol generating device 100 for charging or replacement, and the charged battery or a new battery may be newly attached to the aerosol generating device 100.

As the battery 111 may be detached from or attached to the aerosol generating device 100, a terminal provided in each of the aerosol generating device 100 and the battery 111 may be exposed to the outside. A terminal to electrically connect the aerosol generating device 100 to the battery 111 may be vulnerable to external impurities such as water or dust. Hereinafter, components and methods to protect the aerosol generating device 100 and the battery 111 from external impurities are described in detail.

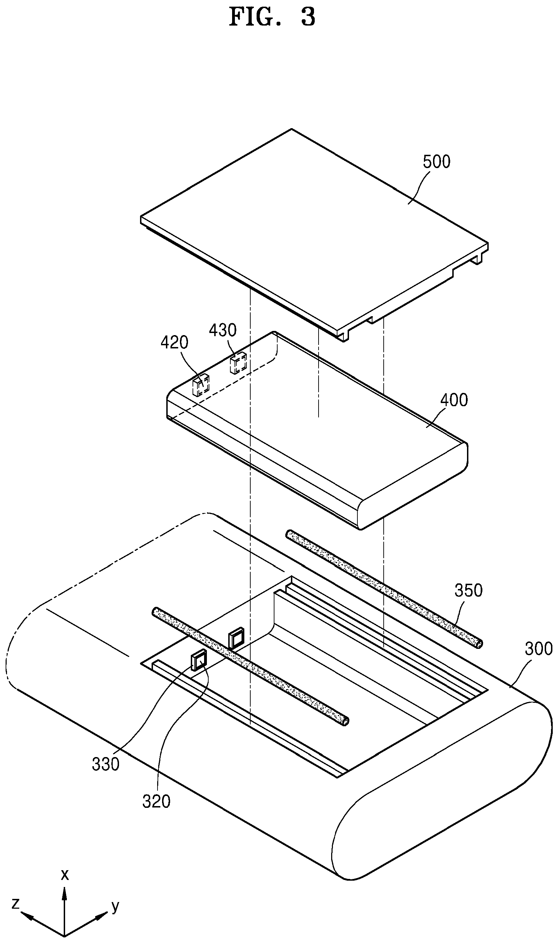

FIG. 3 is an exploded perspective view of some components of an aerosol generating device according to an embodiment.

Referring to FIG. 3, an aerosol generating device (e.g., the aerosol generating device 100 of FIGS. 1 and 2A to 2E) according to an embodiment may include a main body 300, a battery 400, and a battery cover 500. The components included in the aerosol generating device according to an embodiment are not limited to the components illustrated in FIG. 3, and the components of the aerosol generating device illustrated in FIG. 3 may be replaced by other components, or additional components may be added to the aerosol generating device. For example, at least one of the components of the aerosol generating device of FIG. 3 may be the same or substantially the same as the components of the aerosol generating device 100 of FIGS. 1 and 2A to 2E.

The main body 300 may partially form the exterior of the aerosol generating device, and the components of the aerosol generating device may be arranged in the main body 300. For example, a heater (e.g., the heaters 120a to 120e of FIGS. 2A to 2E) for heating an aerosol generating material or a processor (e.g., the processor 130 of FIGS. 2A to 2E) for controlling an operation of the aerosol generating device may be arranged in the main body 300, but it is not limited thereto.

The main body 300 may further include a battery accommodation space 310 for accommodating the battery 400. The battery accommodation space 310 may be formed at a side of the main body 300 and may accommodate the battery 400. For example, as illustrated in FIG. 3, the battery accommodation space 310 may be formed at the side of the main body 300 toward a +x axis. However, the side of the main body 300 at which the battery accommodation space 310 is formed is not limited thereto. As another example, the battery accommodation space 310 may be formed at a side the main body 300 toward a +y axis. The battery accommodation space 310 may be recessed toward the inside of the main body 300 to accommodate the battery 400. The depth by which the battery accommodation space 310 is recessed may correspond to the thickness of the battery 400 (e.g., the length of the battery 400 in an x axis direction).

One or more first terminals 320 may be arranged at a side (e.g., the side toward a +z axis direction) of the battery accommodation space 310. The first terminal 320 may be configured for the aerosol generating device to receive power from the battery 400 accommodated in the battery accommodation space 310. A surface (e.g., a surface toward the +z axis direction) of the first terminal 320 may be electrically connected to internal components (e.g., the heater, the processor, etc.) of the main body 300. Another surface (e.g., a surface toward a -z axis direction) of the first terminal 320 may be exposed to the outside of the main body 300.

The first terminal 320 exposed to the outside of the main body 300 may be in contact with a battery terminal 420 of the battery 400, when the battery 400 is coupled to or accommodated in the battery accommodation space 310. The first terminal 320 of the main body 300 may be electrically connected to the battery terminal 420 of the battery 400, so that the components of the aerosol generating device may receive power from the battery 400. The first terminal 320 may include at least one material from among copper, aluminum, gold, and silver. For example, a surface of the first terminal 320 may be plated with a gold or silver material. However, it is not limited thereto, and the material of the first terminal 320 may include all materials for electrically connecting the first terminal 320 to the battery terminal 420.

The drawing illustrates only the embodiment in which two first terminals 320 are arranged at a side of the battery accommodation space 310. However, the structure of arrangement and the number of first terminals 320 are not limited thereto.

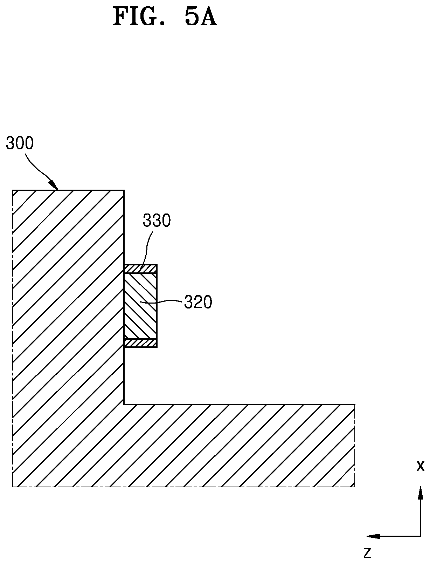

In the battery accommodation space 310, a first sealing member 330, which is arranged to surround the first terminal 320 and configured to prevent the introduction of external impurities such as water or dust into the first terminal 320 of the battery accommodation space 310, may further be arranged. The shape of the first sealing member 330 is to be described in detail below with reference to FIGS. 5A to 5C.

The battery 400 may be coupled to or accommodated in the battery accommodation space 310 and may supply power for the components arranged in the main body 300. The battery 400 may have a cross-section (e.g., a cross-section taken along an xy plane) having a rectangular shape or a square pillar shape having a round square corner, but is not limited thereto.

One or more battery terminals 420 may be arranged in the battery 400. The battery terminal 420 may be configured to supply power to the components in the main body 300. The structure of arrangement and the number of battery terminals 420 may correspond to the structure of arrangement and the number of first terminals 320. When the battery 400 is coupled to or accommodated in the battery accommodation space 310, the battery terminals 420 included in the battery 400 may be respectively in contact with the first terminals 320 included in the main body 300.

The battery terminal 420 may include at least one of copper, aluminum, gold, and silver. For example, a surface of the battery terminal 420 may be plated with gold or silver. However, it is not limited thereto, and the material of the battery terminal 420 may include all materials for electrically connecting the battery terminal 420 to the first terminal 320.

The drawing illustrates only the embodiment in which two battery terminals 420 are arranged at a side of the battery 400. However, the structure of arrangement and the number of battery terminals 420 are not limited thereto.

In the battery 400, a battery sealing member 430, which is arranged to surround the battery terminal 420 and configured to prevent the introduction of external impurities such as water or dust into the battery terminal 420 of the battery 400, may further be arranged. The battery sealing member 430 may prevent the exposure of the battery terminal 420 to external impurities, and thus, may prevent the damage to or malfunction of the battery terminal 420.

The battery cover 500 may be detachably coupled to the main body 300 and may protect the battery 400. The battery cover 500 may open the battery accommodation space 310 while the battery cover 500 is being detached or separated from the main body 300, and the battery cover 500 may close the battery accommodation space 310 while the battery cover 500 is being attached or coupled to the main body 300.

When the battery cover 500 is detached from the main body 300, the battery accommodation space 310 may be exposed to the outside of the main body 300. The battery 400 expired or needing to be charged may be separated from the main body 300 through the battery accommodation space 310 exposed to the outside, and the new battery 400 or the charged battery 400 may be coupled to the main body 300 through the battery accommodation space 310 exposed to the outside.

When the battery cover 500 is attached to the main body 300, the battery cover 500 may cover the battery accommodation space 310 so that the battery 400 accommodated in the battery accommodation space 310 may not be exposed to the outside. The battery cover 500 may prevent the introduction of external impurities such as water and/or dust into the battery accommodation space 310, thereby preventing the battery terminal 420 of the battery 400 and/or the first terminal 320 of the main body 300 from being exposed to the external impurities so as to be damaged or to malfunction.

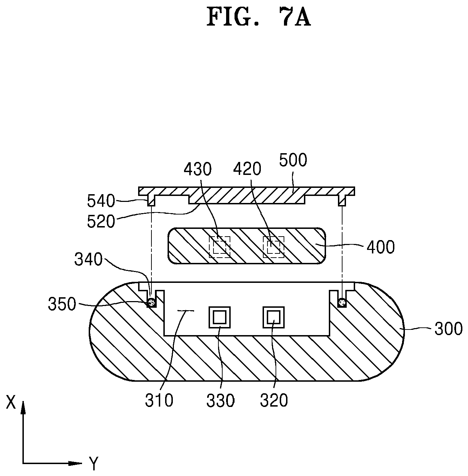

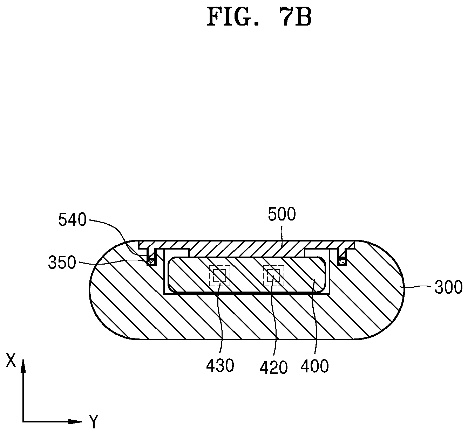

The main body 300 may further include an elastic member 350 for preventing the introduction of external impurities into the battery accommodation space 310 through a gap. The battery cover 500 may be detachably coupled to the main body 300, and thus, a gap may be formed at a location of the main body 300, at which the battery cover 500 and the main body 300 are coupled to each other, and through the gap, external impurities may be introduced into the battery accommodation space 310. Even when some external impurities are introduced into the battery accommodation space 310, the elastic member 350 may prevent the contact between the external impurities and the first terminal 320 and/or the battery terminal 420 as much as possible. The detailed structure of arrangement of the elastic member 350 is to be described below with reference to FIGS. 7A and 7B.

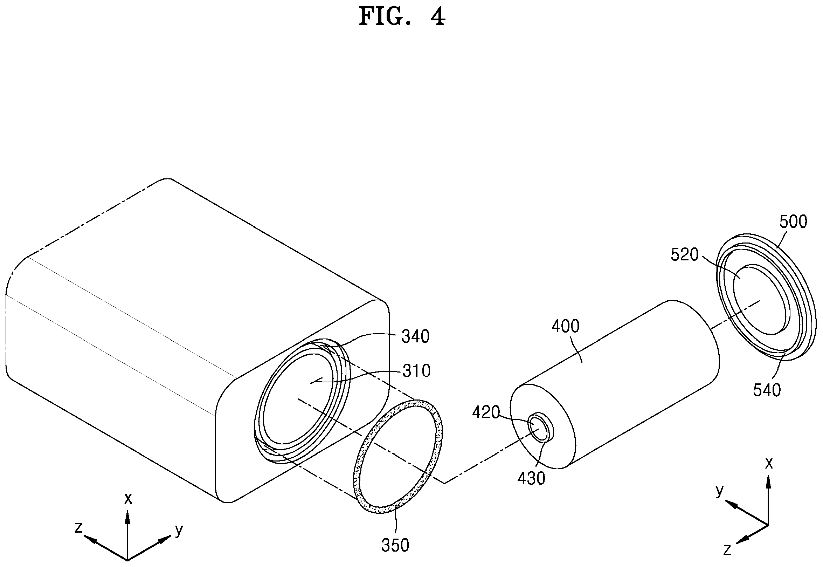

FIG. 4 is an exploded perspective view of some components of an aerosol generating device according to another embodiment.

Referring to FIG. 4, an aerosol generating device (e.g., the aerosol generating device 100 of FIGS. 1 and 2A to 2E) according to another embodiment may include the main body 300, the battery 400, and the battery cover 500. The aerosol generating device illustrated in FIG. 4 may differ from the aerosol generating device illustrated in FIG. 3 only in terms of the shape and the structure of arrangement of the main body 300, the battery 400, and the battery cover 500. Hereinafter, the same descriptions are omitted.

The main body 300 may partially form the exterior of the aerosol generating device, and the components of the aerosol generating device may be arranged in the main body 300. For example, a heater (e.g., the heaters 120a to 120e of FIGS. 2A to 2E) for heating an aerosol generating material or a processor (e.g., the processor 130 of FIGS. 2A to 2E) for controlling an operation of the aerosol generating device may be arranged in the main body 300, but it is not limited thereto.

The main body 300 may further include the battery accommodation space 310 for accommodating the battery 400. The battery accommodation space 310 may be formed at an area of the main body 300 and may accommodate the battery 400. For example, as illustrated in FIG. 4, the battery accommodation space 310 may be formed in an inner space of the main body 300. The battery accommodation space 310 may be formed at a side of the main body 300 in a -z axis and may be recessed toward a +z axis direction of the main body 300. The depth by which the battery accommodation space 310 is recessed may correspond to the length (e.g., the length in a z axis direction) of the battery 400.

Although not shown, one or more first terminals 320 may be arranged at a side (e.g., the side toward the +z axis direction) of the battery accommodation space 310. The first terminal 320 may be configured for the aerosol generating device to receive power from the battery 400 accommodated in the battery accommodation space 310. A surface (e.g., a surface toward the +z axis direction) of the first terminal 320 may be electrically connected to the internal components (e.g., the heater, the processor, etc.) of the main body 300. Another surface (e.g., a surface toward a -z axis direction) of the first terminal 320 may be exposed to the outside of the main body 300.

The first terminal 320 exposed to the outside of the main body 300 may be in contact with the battery terminal 420 of the battery 400, when the battery 400 is coupled to or accommodated in the battery accommodation space 310. The first terminal 320 of the main body 300 may be electrically connected to the battery terminal 420 of the battery 400, so that the components of the aerosol generating device may receive power from the battery 400.

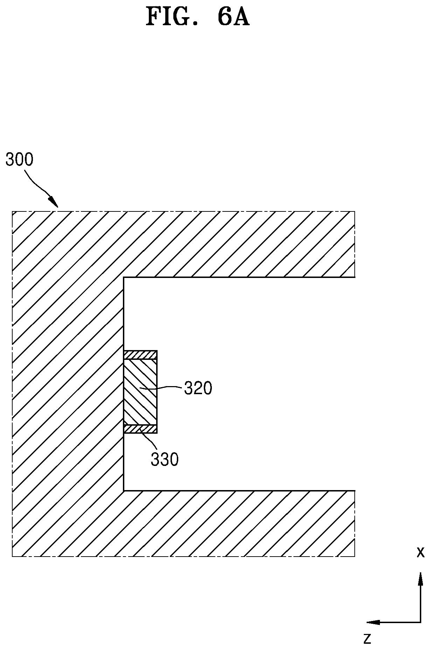

In the battery accommodation space 310, the first sealing member 330, which is arranged to surround the first terminal 320 and configured to prevent the introduction of external impurities such as water or dust into the first terminal 320 of the battery accommodation space 310, may further be arranged. The shape of the first sealing member 330 is to be described in detail below with reference to FIGS. 6A to 6C.

The battery 400 may be coupled to or accommodated in the battery accommodation space 310 and may supply power for the components arranged in the main body 300. The drawing illustrates only the embodiment in which the battery 400 may have a cross-section (e.g., the cross-section taken along an xy plane) having a circular or oval cylindrical shape. However, the shape of the battery 400 is not limited thereto. As another example, the battery 400 may have a cylindrical shape having an end at which a square pillar having a stubby tip is placed, like a candle.

One or more battery terminals 420 may be arranged in the battery 400. The battery terminal 420 may be configured to supply power to the components in the main body 300. The structure of arrangement and the number of battery terminals 420 may correspond to the structure of arrangement and the number of first terminals 320. When the battery 400 is coupled to or accommodated in the battery accommodation space 310, the battery terminals 420 included in the battery 400 may be respectively in contact with the first terminals 320 included in the main body 300.

The drawing illustrates only the embodiment in which one battery terminal 420 is arranged at a side of the battery 400. However, the structure of arrangement and the number of battery terminals 420 are not limited thereto.

In the battery 400, a battery sealing member 430, which is arranged to surround the battery terminal 420 and configured to prevent the introduction of external impurities such as water or dust into the battery terminal 420 of the battery 400, may further be arranged. The battery sealing member 430 may prevent the exposure of the battery terminal 420 to external impurities, which may lead to damage to or malfunction of the battery terminal 420.

The battery cover 500 may be detachably coupled to the main body 300 to protect the battery 400. The battery cover 500 may open the battery accommodation space 310 while the battery cover 500 is being detached or separated from the main body 300, and the battery cover 500 may close the battery accommodation space 310 while the battery cover 500 is being attached or coupled to the main body 300.

When the battery cover 500 is detached from the main body 300, the battery accommodation space 310 may be exposed to the outside of the main body 300. The battery 400 expired or needing to be charged may be separated from the main body 300 through the battery accommodation space 310 exposed to the outside, and the new battery 400 or the charged battery 400 may be coupled to the main body 300 through the battery accommodation space 310 exposed to the outside.

When the battery cover 500 is attached to the main body 300, the battery cover 500 may cover the battery accommodation space 310 so that the battery 400 accommodated in the battery accommodation space 310 may not be exposed to the outside. The battery cover 500 may prevent the introduction of external impurities such as water and/or dust into the battery accommodation space 310, thereby preventing the battery terminal 420 of the battery 400 and/or the first terminal 320 of the main body 300 from being exposed to the external impurities so as to be damaged or to malfunction.

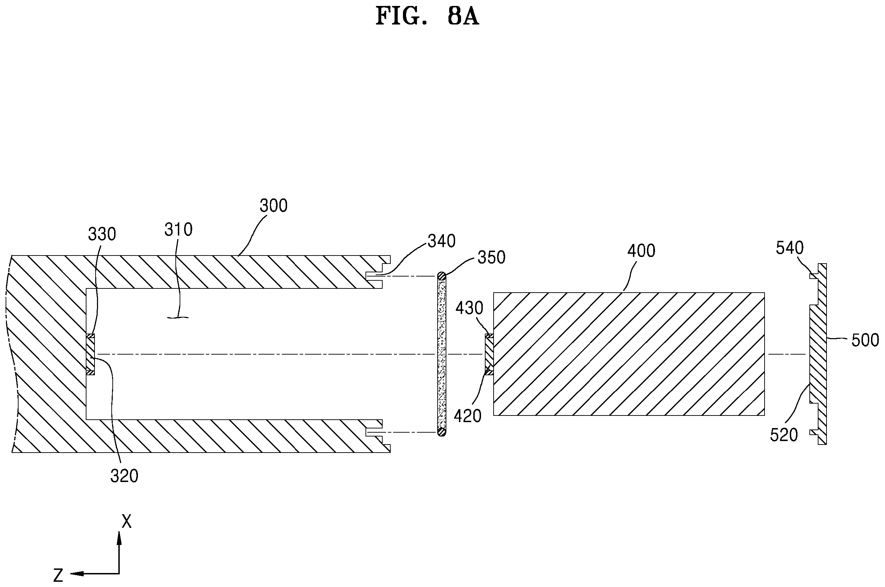

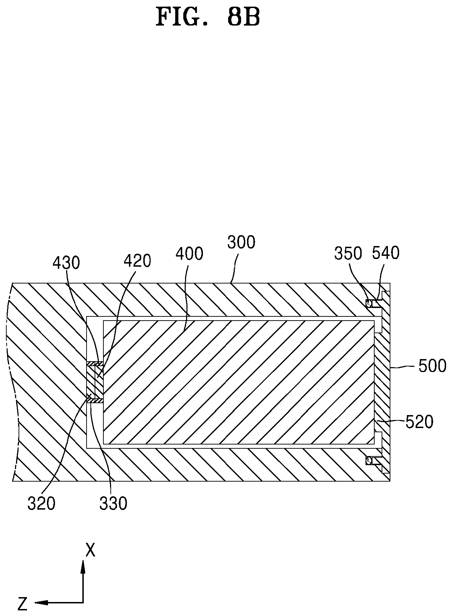

The main body 300 may further include the elastic member 350 for preventing the introduction of external impurities into the battery accommodation space 310 through a gap. The battery cover 500 may be detachably coupled to the main body 300, and thus, a gap may be formed at a location of the main body 300, at which the battery cover 500 and the main body 300 are coupled to each other, and through the gap, external impurities may be introduced into the battery accommodation space 310. Even when some external impurities are introduced into the battery accommodation space 310, the elastic member 350 may prevent the contact between the external impurities and the first terminal 320 and/or the battery terminal 420 as much as possible. The detailed structure of arrangement of the elastic member 350 is to be described below with reference to FIGS. 8A and 8B.

FIG. 5A is a view for describing the first sealing member of FIG. 3, according to an embodiment.

Referring to FIG. 5A, the main body 300 may include one or more first terminals 320 and one or more first sealing members 330. The main body 300 may include a battery accommodation space (e.g., the battery accommodation space 310 of FIG. 3) recessed toward the inside of the main body 300, and the one or more first terminals 320 may be arranged at a side (e.g., the side toward a +z axis) of the battery accommodation space.

The one or more first sealing members 330 may be located at the side of the battery accommodation space, at which the first terminals 320 are arranged, and may be arranged to surround an outer circumferential surface of each of the first terminals 320. When the battery accommodation space is viewed in a +z axis direction, the first sealing member 330 may have a closed-loop ring shape having a circular or quadrangular cross-section.

The first sealing member 330 may include an elastic material. For example, the first sealing member 330 may include a material, such as insulating rubber, polyurethane resins, or the like. The first sealing member 330 including the elastic material may pressurize and seal the outer circumferential surface of the first terminal 320.

The aerosol generating device may include the first sealing member 330 surrounding the first terminal 320 of the main body 300, and thus, may prevent the introduction of external impurities such as water or dust into the first terminal 320. Accordingly, the aerosol generating device may prevent damage to or malfunction of the first terminal 320 and the aerosol generating device electrically connected to the first terminal 320, the damage or the malfunction being caused by the exposure of the first terminal 320 and the aerosol generating device to the external impurities.

Although not shown, a battery (e.g., the battery 400 of FIG. 3) may include one or more battery terminals (e.g., the battery terminal 420 of FIG. 3) and one or more battery sealing members (e.g., the battery sealing member 430 of FIG. 3).

The one or more battery sealing members may be located at a side of the battery, at which the battery terminals are arranged, so as to surround an outer circumferential surface of each of the battery terminals. When the battery is viewed in a -z axis direction, the battery sealing member may have a closed-loop ring shape having a circular or quadrangular cross-section.

The battery sealing member may include an elastic material. For example, the battery sealing member may include a material, such as insulating rubber, polyurethane resins, or the like. The battery sealing member including the elastic material may pressurize and seal the outer circumferential surface of the battery terminal.

The aerosol generating device may include the battery sealing member surrounding the battery terminal of the main body 300, and thus, may prevent the introduction of external impurities such as water or dust into the battery terminal. Accordingly, the aerosol generating device may prevent damage to or malfunction of the battery terminal and the battery electrically connected to the battery terminal, the damage or the malfunction being caused by the exposure of the battery terminal and the battery to the external impurities.

When the battery is coupled to or accommodated in the battery accommodation space, the battery terminals included in the battery may be respectively in contact with the first terminals 320 included in the main body 300. The structure of arrangement and the number of battery terminals may correspond to the structure of arrangement and the number of first terminals 320. When the battery is coupled to or accommodated in the battery accommodation space, the first sealing members 330 may be arranged to face the battery sealing members, respectively.

The battery terminal of the battery and the first terminal 320 of the main body 300 may be sealed by the battery sealing member included in the battery and the first sealing member 330 included in the main body 300. Thus, the battery terminal and the first terminal 320 may be protected from external impurities, such as water or dust. Accordingly, the aerosol generating device may prevent the battery terminal, the first terminal 320, and the aerosol generating device electrically connected thereto from being damaged or malfunctioning due to exposure to the external impurities.

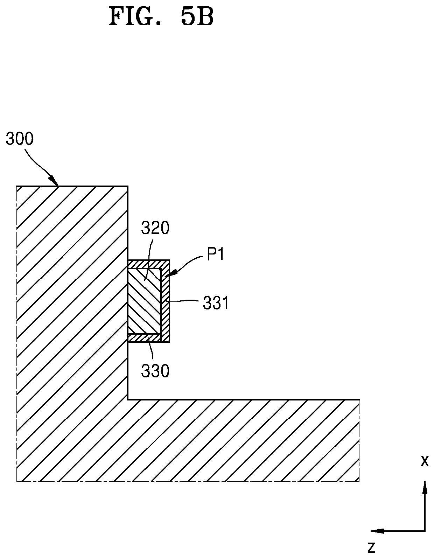

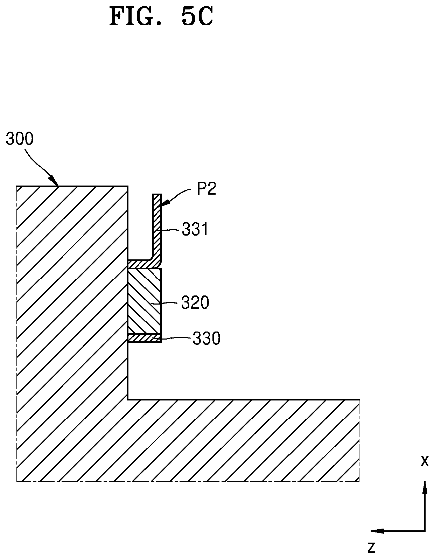

FIG. 5B is a view for describing a state in which the first sealing member of FIG. 3 is closed, according to another embodiment, and FIG. 5C is a view for describing a state in which the first sealing member of FIG. 5B is open.

Referring to FIG. 5B and FIG. 5C, the main body 300 may include the one or more first terminals 320 and the one or more first sealing members 330. An aerosol generating device of FIGS. 5B and 5C may correspond to an aerosol generating device of FIG. 5A, in which a cover 331 may further be included in the first sealing member 330. Hereinafter, the same descriptions are omitted.

The cover 331 may extend from an upper portion (e.g., the portion toward a +x axis) of the first sealing member 330 and may close or open the first terminal 320. For example, an end of the cover 331 may be connected to the upper portion of the first sealing member 330, and the cover 331 may extend on the first sealing member 330 such that another end of the cover 331 may face a lower portion (e.g., the portion toward a -x axis) of the first sealing member 330.

The cover 331 may be movably arranged and may cover the first terminal 320 not to expose the first terminal 320 to the outside of the aerosol generating device or may expose the first terminal 320 to the outside of the aerosol generating device. For example, the cover 331 may be arranged at a first position P1 to close the first terminal 320 and at a second position P2 to open the first terminal 320 to expose the first terminal 320.

The cover 331 may be located at the first position P1 not to expose the first terminal 320 to the outside, thereby protecting the first terminal 320 from external shocks or external impurities. The cover 331 may move from the first position P1 to the second position P2 to expose the first terminal 320 to the outside. The first terminal 320 exposed to the outside may be in contact with the battery terminal of the battery, when the battery is accommodated in or coupled to the battery accommodation space, and thus, through the first terminal 320, the aerosol generating device may receive power from the battery terminal.

The cover 331 may selectively expose the first terminal 320, and thus, may prevent the introduction of external impurities into the first terminal 320 to prevent damage to and/or malfunction of the first terminal 320 or may enable smooth electrical connection between the first terminal 320 and the battery terminal to improve the performance of the aerosol generating device.

Although not shown, a battery sealing member (e.g., the battery sealing member 430 of FIG. 3) provided in the battery (e.g., the battery 400 of FIG. 3) may further include a battery cover extending from an upper portion (e.g., the portion toward the +x axis) of the battery sealing member.

The battery cover may close or open the battery sealing member. For example, an end of the battery cover may be connected to the upper portion of the battery sealing member, and the battery cover may extend on the battery sealing member such that another end of the battery cover may face a lower portion (e.g., the portion toward the -x axis) of the battery sealing member.

The battery cover may be movably arranged and may cover the battery terminal not to expose the battery terminal to the outside of the battery or may expose the battery terminal to the outside of the battery. For example, the battery cover may be arranged at a first position to close the battery terminal and may move from the first position to a second position to open the battery terminal.

The battery cover may be located at the first position not to expose the battery terminal to the outside, thereby protecting the battery terminal from external shocks or external impurities. The battery cover may be located at the second position to expose the battery terminal to the outside. The battery terminal exposed to the outside may be in contact with the first terminal 320 of the main body 300, when the battery is accommodated in or coupled to the battery accommodation space, and thus, through the first terminal 320, the battery may supply power to the aerosol generating device.

The battery cover may selectively expose the battery terminal, and thus, may prevent the introduction of external impurities into the battery terminal to prevent damage to and/or malfunction of the battery terminal or may enable smooth electrical connection between the first terminal 320 and the battery terminal to improve the performance of the aerosol generating device.

FIG. 6A is a view for describing the first sealing member of FIG. 4, according to an embodiment.

Referring to FIG. 6A, the main body 300 may include the one or more terminals 320 and the one or more first sealing members 330. An aerosol generating device illustrated in FIG. 6A may differ from the aerosol generating device illustrated in FIG. 6A only in terms of the shape and the structure of arrangement of the main body 300, the battery 400, and the battery cover 500. Hereinafter, the same descriptions are omitted.

The main body 300 may include a battery accommodation space (e.g., the battery accommodation space 310 of FIG. 4) recessed toward the inside of the main body 300, and the one or more first terminals 320 may be arranged at a side (e.g., the side toward a +z axis) of the battery accommodation space.

The one or more first sealing members 330 may be located at a side of the battery accommodation space, at which the first terminals 320 are arranged, and may be arranged to surround an outer circumferential surface of each of the first terminals 320. When the battery accommodation space is viewed in a +z axis direction, the first sealing member 330 may have a closed-loop ring shape having a circular or quadrangular cross-section.

The first sealing member 330 may include an elastic material. For example, the first sealing member 330 may include a material, such as insulating rubber, polyurethane resins, or the like. The first sealing member 330 including the elastic material may pressurize and seal the outer circumferential surface of the first terminal 320.

The aerosol generating device may include the first sealing member 330 surrounding the first terminal 320 of the main body 300, and thus, may prevent the introduction of external impurities such as water or dust into the first terminal 320. Accordingly, the aerosol generating device may prevent damage to or malfunction of the first terminal 320 and the aerosol generating device electrically connected to the first terminal 320, the damage or the malfunction being caused by the exposure of the first terminal 320 and the aerosol generating device to the external impurities.

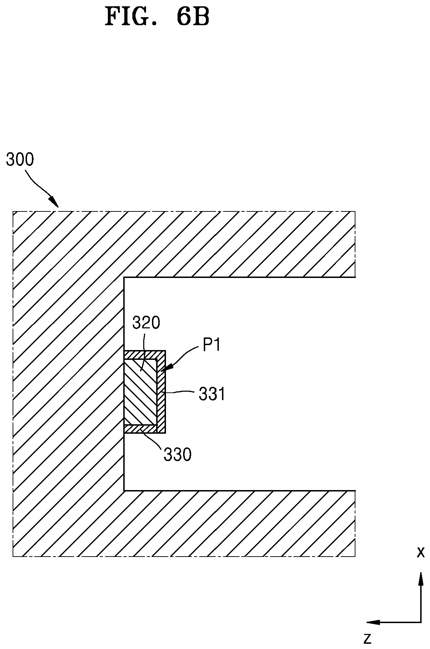

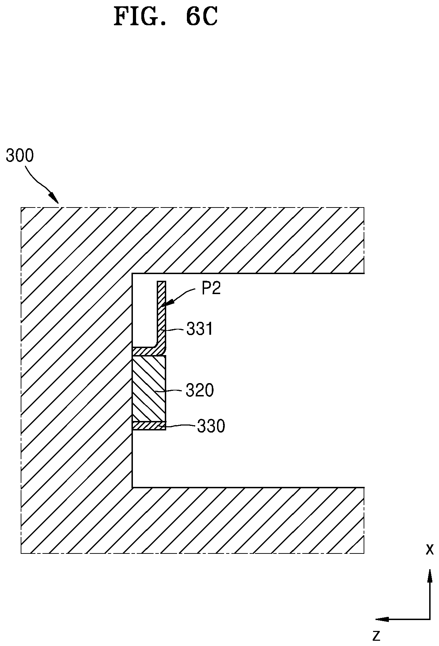

FIG. 6B is a view for describing a state in which the first sealing member of FIG. 4 is closed, according to another embodiment, and FIG. 6C is a view for describing a state in which the first sealing member of FIG. 6B is open.

Referring to FIG. 6B and FIG. 6C, the main body 300 may include the one or more first terminals 320 and the one or more first sealing members 330. The aerosol generating device of FIGS. 5B and 5C may correspond to the aerosol generating device of FIG. 5A, in which the cover 331 may further be included in the first sealing member 330. Hereinafter, the same descriptions are omitted.

The cover 331 may extend from an upper portion (e.g., the portion toward a +x axis) of the first sealing member 330 and may close or open the first terminal 320. For example, an end of the cover 331 may be connected to the upper portion of the first sealing member 330, and the cover 331 may extend on the first sealing member 330 such that another end of the cover 331 may face a lower portion (e.g., the portion toward a -x axis) of the first sealing member 330.

The cover 331 may be movably arranged and may cover the first terminal 320 not to expose the first terminal 320 to the outside of the aerosol generating device or may expose the first terminal 320 to the outside of the aerosol generating device. For example, the cover 331 may be arranged at a first position P1 to close the first terminal 320 and at a second position P2 to open the first terminal 320 to expose the first terminal 320.

The cover 331 may be located at the first position P1 not to expose the first terminal 320 to the outside, thereby protecting the first terminal 320 from external shocks or external impurities. The cover 331 may move from the first position P1 to the second position P2 to expose the first terminal 320 to the outside. The first terminal 320 exposed to the outside may be in contact with the battery terminal of the battery, when the battery is accommodated in or coupled to the battery accommodation space, and thus, through the first terminal 320, the aerosol generating device may receive power from the battery terminal.

The cover 331 may selectively expose the first terminal 320, and thus, may prevent the introduction of external impurities into the first terminal 320 to prevent damage to and/or malfunction of the first terminal 320 or may enable smooth electrical connection between the first terminal 320 and the battery terminal to improve the performance of the aerosol generating device.

Hereinafter, the detailed shape and structure of arrangement of the main body, the battery cover, and the elastic member are described.

FIG. 7A illustrates a state before the battery and the battery cover of FIG. 3 are coupled to the battery accommodation space, and FIG. 7B illustrates a state after the battery and the battery cover of FIG. 3 are coupled to the battery accommodation space. FIGS. 7A and 7B may be views showing, in a +z axis direction, an xy planar cross-section of the aerosol generating device according to an embodiment illustrated in FIG. 3.

The battery cover 500 may include an external battery cover 510, an internal battery cover 520, and a protrusion 540. The battery cover 500 may be detachably coupled to the main body 300 and may protect the battery 400. The battery cover 500 may open the battery accommodation space 310 while the battery cover 500 is being detached or separated from the main body 300, and the battery cover 500 may close the battery accommodation space 310 while the battery cover 500 is being attached or coupled to the main body 300.

The external battery cover 510 may be arranged at an area of the main body 300 and may form an external surface (e.g., the surface toward a +x axis direction) of the battery cover 500. After the battery 400 is accommodated in the battery accommodation space 310, the external battery cover 510 may close the battery accommodation space 310, and thus, may protect the battery 400 from external shocks or external impurities.

The internal battery cover 520 may be formed at the center of an internal surface (e.g., the surface toward a -x axis direction) of the battery cover 500 and may protrude in a direction (e.g., the surface toward the -x axis direction) toward the inside of the battery accommodation space 310. When the battery cover 500 is coupled to the main body 300 after the battery 400 is accommodated in the battery accommodation space 310, the internal battery cover 520 may pressurize the battery 400 in a direction (e.g., the -x axis direction) toward the main body 300. Because the battery 400 may be pressurized by the internal battery cover 520, the battery 400 may be fixed in the battery accommodation space 310. Thus, the battery 400 may be protected from external shocks.

The protrusion 540 may be formed along an edge of the internal surface of the battery cover 500 and may protrude in the direction toward the inside of the battery accommodation space 310. The protrusion 540 may be arranged along the edge of the battery cover 500. For example, the protrusion 540 may have a square ring shape when the internal surface of the battery cover 500 is viewed in the +x axis direction. The protrusion 540 may be inserted into a groove 340 formed in the main body 300 and interlocked with the groove 340, and thus, the battery cover 500 may be coupled to or fixed in the main body 300. The protrusion 540 and the groove 340 may be arranged in the battery cover 500 and the main body 300, respectively, to correspond to each other, so as to be interlocked each other.

The main body 300 may further include the elastic member 350 located between the protrusion 540 and the groove 340 when the protrusion 540 and the groove 340 are coupled to each other, the elastic member 350 being configured to prevent the introduction of external impurities into the battery accommodation space 310. The elastic member 350 may be arranged along an edge of the battery cover 500 and may have a square ring shape when the battery accommodation space is viewed in the -x axis direction. However, it is not limited thereto, and the elastic member 350 may be inserted into at least an area of the groove 340 formed in the main body 300. The protrusion 540 provided in the battery cover 500 may be inserted into the groove 340 provided in the main body 300, and thus, the protrusion 540 may pressurize the elastic member 350 arranged in the groove 340.

The elastic member 350 may include insulating rubber, polyurethane resins, or the like. The elastic member 350 may be pressurized by the protrusion 540 and may seal a gap between the protrusion 540 and the groove 340.

In the aerosol generating device, the elastic member 350 may be arranged between the groove 340 of the main body 300 and the protrusion 540 of the battery cover 500, and thus, the introduction of external impurities such as water or dust into the battery accommodation space 310 may be prevented. Accordingly, the aerosol generating device may prevent the first terminal 320 arranged in the battery accommodation space 310 and the aerosol generating device electrically connected to the first terminal 320 from being exposed to the external impurities so as to be damaged or to malfunction.

The drawing illustrates only the embodiment in which the protrusion 540 may be formed on the internal surface of the battery cover 500 along the edge of the battery cover 500, and with the protrusion 540 inserted into or interlocked with the groove 340 formed in the main body 300, the elastic member 350 may be pressurized. However, it is not limited thereto. As another example, a protrusion may be formed on an external surface of the main body 300 along an edge of the battery accommodation space 310, and the protrusion may be inserted into or interlocked with a groove formed in the internal surface of the battery cover 500 and may pressurize the elastic member 350.

FIG. 8A illustrates a state before the battery and the battery cover of FIG. 4 are coupled to the battery accommodation space, and FIG. 8B illustrates a state after the battery and the battery cover of FIG. 4 are coupled to the battery accommodation space. FIGS. 8A and 8B may be views showing, in a +y axis direction, an xz planar cross-section of the aerosol generating device according to another embodiment illustrated in FIG. 4. The aerosol generating device illustrated in FIGS. 8A and 8B may differ from the aerosol generating device illustrated in FIGS. 7A and 7B only in terms of the shape and the structure of arrangement of the main body 300, the battery 400, and the battery cover 500. Hereinafter, the same descriptions are omitted.

The battery cover 500 may include the external battery cover 510, the internal battery cover 520, and the protrusion 540. The battery cover 500 may be detachably coupled to the main body 300 and may protect the battery 400. The battery cover 500 may open the battery accommodation space 310 while the battery cover 500 is being detached or separated from the main body 300, and the battery cover 500 may close the battery accommodation space 310 while the battery cover 500 is being attached or coupled to the main body 300.

The external battery cover 510 may be arranged at an area of the main body 300 and may form an external surface (e.g., the surface toward a -z axis direction) of the battery cover 500. After the battery 400 is accommodated in the battery accommodation space 310, the external battery cover 510 may close the battery accommodation space 310, and thus, may protect the battery 400 from external shocks or external impurities.

The internal battery cover 520 may be formed at the center of an internal surface (e.g., the surface toward a +z axis direction) of the battery cover 500 and may protrude in a direction (e.g., the surface toward the +z axis direction) toward the inside of the battery accommodation space 310. When the battery cover 500 and the main body 300 are coupled to each other after the battery 400 is accommodated in the battery accommodation space 310, the internal battery cover 520 may pressurize the battery 400 in a direction (e.g., the +z axis direction) toward the main body 300. Because the battery 400 may be pressurized by the internal battery cover 520, the battery 400 may be fixed in the battery accommodation space 310. Thus, the battery 400 may be protected from external shocks.

The protrusion 540 may be formed along an edge of the internal surface of the battery cover 500 and may protrude in the direction toward the inside of the battery accommodation space 310. The protrusion 540 may be arranged along the edge of the battery cover 500. For example, the protrusion 540 may have a circular ring shape when the internal surface (e.g., the surface toward the -z axis direction) of the battery cover 500 is viewed in the -z axis direction. The protrusion 540 may be inserted into the groove 340 formed in the main body 300 and interlocked with the groove 340, and thus, the battery cover 500 may be coupled to or fixed in the main body 300. The protrusion 540 and the groove 340 may be arranged in the battery cover 500 and the main body 300, respectively, to correspond to each other, so as to be interlocked each other.

The main body 300 may further include the elastic member 350 located between the protrusion 540 and the groove 340 when the protrusion 540 and the groove 340 are coupled to each other, the elastic member 350 being configured to prevent the introduction of external impurities into the battery accommodation space 310. The elastic member 350 may be arranged along an edge of the battery cover 500 and may have a circular ring shape when the internal surface of the battery cover 500 is viewed in the -z axis direction. However, it is not limited thereto, and the elastic member 350 may be inserted into at least an area of the groove 340 formed in the main body 300. The protrusion 540 provided in the battery cover 500 may be inserted into the groove 340 provided in the main body 300, and thus, the protrusion 540 may pressurize the elastic member 350 arranged in the groove 340. The elastic member 350 may be pressurized by the protrusion 540 and may seal a gap between the protrusion 540 and the groove 340.

In the aerosol generating device, the elastic member 350 may be arranged between the groove 340 of the main body 300 and the protrusion 540 of the battery cover 500, and thus, the introduction of external impurities such as water or dust into the battery accommodation space 310 may be prevented. Accordingly, the aerosol generating device may prevent the first terminal 320 arranged in the battery accommodation space 310 and the aerosol generating device electrically connected to the first terminal 320 from being exposed to the external impurities so as to be damaged or to malfunction.

The drawing illustrates only the embodiment in which the protrusion 540 may be formed on the internal surface of the battery cover 500 along the edge of the battery cover 500, and with the protrusion 540 inserted into or interlocked with the groove 340 formed in the main body 300, the elastic member 350 may be pressurized. However, it is not limited thereto. As another example, a protrusion may be formed on an external surface of the main body 300 along an edge of the battery accommodation space 310, and the protrusion may be inserted into or interlocked with a groove formed in the internal surface of the battery cover 500 and may pressurize the elastic member 350.

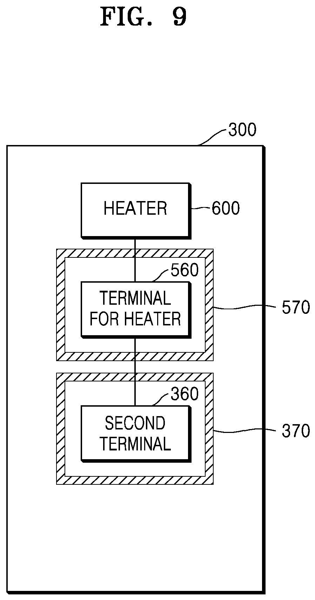

FIG. 9 is a view for describing a second sealing member according to an embodiment and a heater sealing member according to an embodiment. Referring to FIG. 9, an aerosol generating device may include a second terminal 360, a heater 600, and a heater terminal 560. The components included in the aerosol generating device 100 of FIG. 9 are not limited to the components illustrated in FIG. 9, and the components of the aerosol generating device illustrated in FIG. 9 may be replaced by other components, or additional components may be added to the aerosol generating device. For example, at least one of the components of the aerosol generating device of FIG. 9 may be the same or substantially the same as the components of the aerosol generating device 100 of FIG. 3 and/or FIG. 4. Hereinafter, the same descriptions are omitted.

The heater 600 for heating an aerosol generating material inserted into or accommodated in the aerosol generating device and the second terminal 360 electrically connected to the heater 600 may be arranged in the inner space of the main body 300. The second terminal 360 may be configured for the aerosol generating device to supply power to the heater 600 from a battery. At least a surface of the second terminal 360 may be exposed to the outside of the main body 300. The second terminal 360 exposed to the outside of the main body 300 may be in contact with the heater terminal 560 of the heater 600, when the heater 600 is coupled to or accommodated in the main body 300. The second terminal 360 of the main body 300 may be electrically connected to the heater terminal 560 of the heater 600 and may supply power to the heater 600 from the battery. The second terminal 360 may include at least one material from among copper, aluminum, gold, and silver. For example, a surface of the second terminal 360 may be plated with a gold or silver material. However, it is not limited thereto, and the material of the second terminal 360 may include all materials for electrically connecting the second terminal 360 to the heater terminal 560.

In the main body 300, a second sealing member 370, which is arranged to surround the second terminal 360 and configured to prevent the introduction of external impurities such as water or dust into the second terminal 360, may further be arranged. The second sealing member 370 may include an elastic material. For example, the second sealing member 370 may include a material, such as insulating rubber, polyurethane resins, or the like. The second sealing member 370 including the elastic material may pressurize and seal an outer circumferential surface of the second terminal 360.

The aerosol generating device may include the second sealing member 370 surrounding the second terminal 360 of the main body 300, and thus, may prevent the introduction of external impurities such as water or dust into the second terminal 360. Accordingly, the aerosol generating device may prevent damage to or malfunction of the second terminal 360 and the aerosol generating device electrically connected to the second terminal 360, the damage or the malfunction being caused by the exposure of the second terminal 360 and the aerosol generating device to the external impurities.

The heater 600 may receive power from the battery and may heat the aerosol generating material inserted into or accommodated in the aerosol generating device. One or more heater terminals 560 may be arranged in the heater 600. The heater terminal 560 may be configured to receive power from the battery. The structure of arrangement and the number of heater terminals 560 may correspond to the structure of arrangement and the number of second terminals 360. When the heater 600 is coupled to or accommodated in the main body 300, the heater terminals 560 included in the heater 600 may be respectively in contact with the second terminals 360 included in the main body 300.

The heater terminal 560 may include at least one material from among copper, aluminum, gold, and silver. For example, a surface of the heater terminal 560 may be plated with a gold or silver material. However, it is not limited thereto, and the material of the heater terminal 560 may include all materials for electrically connecting the heater terminal 560 to the second terminal 360.

In the heater 600, a heater sealing member 570, which is arranged to surround the heater terminal 560 and configured to prevent the introduction of external impurities such as water or dust into the heater terminal 560, may further be arranged. The heater sealing member 570 may include an elastic material. For example, the heater sealing member 570 may include a material, such as insulating rubber, polyurethane resins, or the like. The heater sealing member 570 including the elastic material may pressurize and seal an outer circumferential surface of the heater terminal 560.

The aerosol generating device may include the heater sealing member 570 surrounding the heater terminal 560 of the heater 600, and thus, may prevent the introduction of external impurities such as water or dust into the heater terminal 560. Accordingly, the aerosol generating device may prevent damage to or malfunction of the heater terminal 560 and the aerosol generating device electrically connected to the heater terminal 560, the damage or the malfunction being caused by the exposure of the heater terminal 560 and the aerosol generating device to the external impurities.

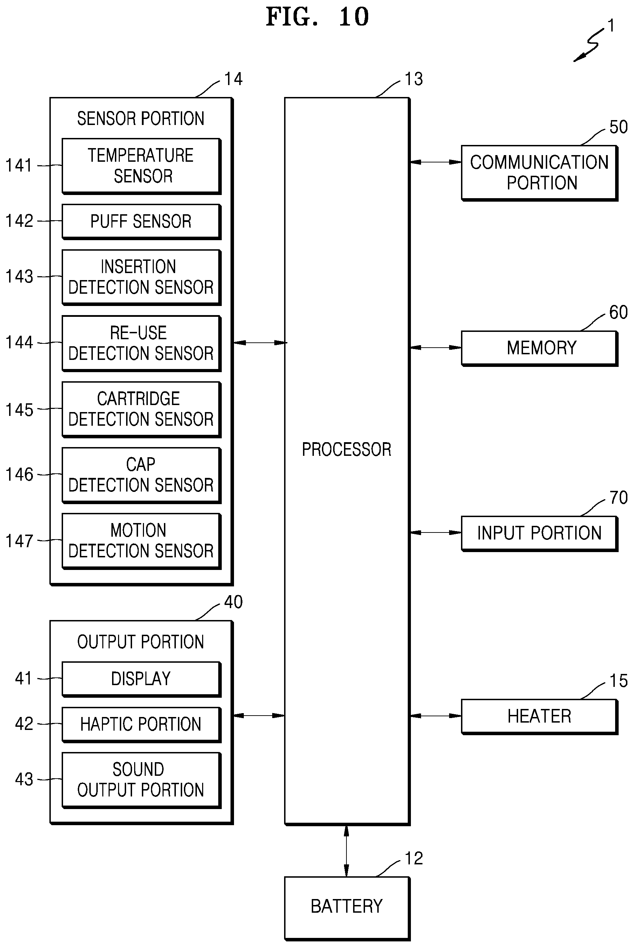

FIG. 10 is a block diagram of an aerosol generating device according to another embodiment.

The aerosol generating device 1 may include a power source 12, a controller 13, a sensor 14, an output unit 40, an input unit 70, a communicator 50, a memory 60, and at least one heater 15. However, an internal structure of the aerosol generating device 1 is not limited to that illustrated in FIG. 1. In other words, according to the design of the aerosol generating device 1, one of ordinary skill in the art related to the present embodiment that some of the components shown in FIG. 1 may be omitted or new components may be added.

The sensor 14 may detect a state of the aerosol generating device 1 or a state around the aerosol generating device 1 and transmit detected information to the controller 13. On the basis of the detected information, the controller 13 may control the aerosol generating device 1 to perform various functions such as control of operations of the cartridge heater 15 and/or the heater 15, a restriction on smoking, determination of whether or not the stick S and/or the cartridge 19 are inserted, and a notification display.

The sensor 14 may include at least one of a temperature sensor 141, a puff sensor 142, an insertion detection sensor 143, a reuse detection sensor 144, a cartridge detection sensor 145, a cap detection sensor 146, and a motion detection sensor 147.

The temperature sensor 141 may detect a temperature at which the cartridge heater 15 and/or the heater 15 are heated. The aerosol generating device 1 may include a separate temperature sensor for detecting the temperatures of the cartridge heater 15 and/or the heater 15, or the cartridge heater 15 and/or the heater 15 may operate as temperature sensors.

The temperature sensor 141 may output a signal corresponding to the temperature of the cartridge heater 15 and/or the heater 15. For example, the temperature sensor 141 may include a resistor element whose resistance value changes in correspondence to a change in the temperature of the cartridge heater 15 and/or the heater 15. The temperature sensor 141 may be implemented by a thermistor or the like, which is an element using a property of changing resistance according to temperature. Here, the temperature sensor 141 may output a signal corresponding to the resistance value of the resistor element as a signal corresponding to the temperature of the cartridge heater 15 and/or the heater 15. For example, the temperature sensor 141 may include a sensor that detects a resistance value of the cartridge heater 15 and/or the heater 15. Here, the temperature sensor 141 may output a signal corresponding to the resistance value of the cartridge heater 15 and/or the heater 15 as a signal corresponding to the temperature of the cartridge heater 15 and/or the heater 15.

The temperature sensor 141 may be arranged around the power source 12 to monitor a temperature of the power source 12. The temperature sensor 141 may be arranged adjacent to the power source 12. For example, the temperature sensor 141 may be attached to one surface of a battery that is the power source 12. For example, the temperature sensor 141 may be mounted on one surface of a PCB.

The temperature sensor 141 may be arranged inside the body 10 to detect an internal temperature of the body 10.

The puff sensor 142 may detect a puff by a user on the basis of various physical changes in an air flow path. The puff sensor 142 may output a signal corresponding to the puff. For example, the puff sensor 142 may be a pressure sensor. The puff sensor 142 may output a signal corresponding to internal pressure of the aerosol generating device 1. Here, the internal pressure of the aerosol generating device 1 may correspond to pressure of the air flow path through which a gas flows. The puff sensor 142 may be arranged in correspondence to the air flow path through which the gas flows in the aerosol generating device 1.

The insertion detection sensor 143 may detect insertion and/or removal of the stick S. The insertion detection sensor 143 may detect a signal change due to the insertion and/or removal of the stick S. The insertion detection sensor 143 may be installed around an insertion space. The insertion detection sensor 143 may detect the insertion and/or removal of the stick S according to a change in a dielectric constant inside the insertion space. For example, the insertion detection sensor 143 may be an inductive sensor and/or a capacitance sensor.

The inductive sensor may include at least one coil. The coil of the inductive sensor may be arranged adjacent to the insertion space. For example, when a magnetic field changes around the coil through which a current flows, characteristics of the current flowing through the coil may change according to Faraday's law of electromagnetic induction. Here, the characteristics of the current flowing through the coil may include a frequency of an alternating current, a current value, a voltage value, an inductance value, an impedance value, and the like.

The inductive sensor may output a signal corresponding to the characteristics of the current flowing through the coil. For example, the inductive sensor may output a signal corresponding to an inductance value of the coil.

The capacitance sensor may include a conductor. The conductor of the capacitance sensor may be arranged adjacent to the insertion space. The capacitance sensor may output a signal corresponding to an ambient electromagnetic characteristic, e.g., a capacitance around the conductor. For example, when the stick S including a metal wrapper is inserted into the insertion space, the electromagnetic characteristic around the conductor may be changed by the wrapper of the stick S.

The reuse detection sensor 144 may detect whether or not the stick S is reused. The reuse detection sensor 144 may be a color sensor. The color sensor may detect a color of the stick S. The color sensor may detect a color of a portion of the wrapper wrapping the outside of the stick S. The color sensor may detect a value for an optical characteristic corresponding to a color of an object, on the basis of light reflected from the object. For example, the optical characteristic may be a wavelength of light. The color sensor may be implemented as a single component with a proximity sensor or may be implemented as a separate component distinguished from the proximity sensor.

At least a portion of the wrapper constituting the stick S may have a color changing by an aerosol. When the stick S is inserted into the insertion space, the reuse detection sensor 144 may be arranged in correspondence to a location at which at least the portion of the wrapper whose color changes by the aerosol is arranged. For example, before the stick S is used by the user, the color of at least the portion of the wrapper may be a first color. Here, when at least the portion of the wrapper is wetted by the aerosol while the aerosol generated by the aerosol generating device 1 passes through the stick S, the color of at least the portion of the wrapper may be changed to a second color. The color of at least the portion of the wrapper may be maintained in the second color after changing from the first color to the second color.

The cartridge detection sensor 145 may detect mounting and/or removal of the cartridge 19. The cartridge detection sensor 145 may be implemented by an inductance-based sensor, a capacitive sensor, a resistance sensor, a hall sensor (a hall IC) using a hall effect, or the like.

The cap detection sensor 146 may detect mounting and/or removal of a cap. When the cap is detached from the body 10, a portion of the cartridge 19 and the body 10 covered by the cap may be exposed to the outside. The cap detection sensor 146 may be implemented by a contact sensor, a hall sensor (a hall IC), an optical sensor, or the like.

The motion detection sensor 147 may detect a motion of the aerosol generating device 1. The motion detection sensor 147 may be implemented as at least one of an acceleration sensor and a gyro sensor.

In addition to the sensors 131 to 137 described above, the sensor 14 may further include at least one of a humidity sensor, an atmospheric pressure sensor, a magnetic sensor, a position sensor (e.g., a global positioning system (GPS)), and a proximity sensor. Functions of the respective sensors may be intuitively inferred from names thereof by one of ordinary skill in the art, and thus, detailed descriptions thereof may be omitted.

The output unit 40 may output information regarding the state of the aerosol generating device 1 and provide the information to the user. The output unit 40 may include at least one of a display 141, a haptic unit 42, and a sound output unit 43, but is not limited thereto. When the display 41 and a touch pad form a layer structure to form a touch screen, the display 41 may be used as an input device in addition to an output device.

The display 41 may visually provide the user with information regarding the aerosol generating device 1. For example, the information regarding the aerosol generating device 1 may refer to various types of information such as a charging/discharging state of the power source 12 of the aerosol-generating device 1, a preheating state of the heater 15, the insertion/removal state of the stick S and/or the cartridge 19, the mounting/removal state of the cap, and the restriction on use of the aerosol generating device 1 (e.g., detection of an abnormal article), and the display 41 may output the information to the outside. For example, the display 41 may be in the form of a light emitting diode (LED) light emitting device. For example, the display 41 may be a liquid crystal display (LCD) panel, an organic light emitting display (OLED)panel, or the like.

The haptic unit 42 may tactilely provide the user with the information regarding the aerosol generating device 1 by converting an electrical signal into a mechanical stimulus or an electrical stimulus. For example, when initial power is supplied to the cartridge heater 15 and/or the heater 15 for a set time, the haptic unit 42 may generate vibration corresponding to completion of initial preheating. The haptic unit 42 may include a vibration motor, a piezoelectric element, or an electrical stimulation device.

The sound output unit 43 may audibly provide the user with the information regarding the aerosol generating device 1. For example, the sound output unit 43 may convert the electrical signal into a sound signal and output the sound signal to the outside.

The power supply 11 may supply power used to operate the aerosol generating device 1. The power source 12 may supply power so that the cartridge heater 15 and/or the heater 15 may be heated. In addition, the power source 12 may supply power needed for operations of the sensor 14, the output unit 40, the input unit 70, the communicator 50, and the memory 60, which are other components provided within the aerosol generating device 1. The power source 12 may be a rechargeable battery or a disposable battery. For example, the power supply 11 may be a lithium polymer (LiPoly) battery, but is not limited thereto.

Although not shown in FIG. 1, the aerosol generating device 1 may further include a power protection circuit. The power protection circuit may be electrically connected to the power source 12 and may include a switching element.

The power protection circuit may cut off an electrical path for the power source 12 according to a certain condition. For example, the power protection circuit may cut off the electrical path for the power source 12 when a voltage level of the power source 12 is a first voltage or more corresponding to overcharging. For example, the power protection circuit may cut off the electrical path for the power source 12 when the voltage level of the power source 12 is less than a second voltage corresponding to overdischarge.

The heater 15 may be supplied with power from the power source 12 and heat a medium or an aerosol generating material within the stick S. Although not shown in FIG. 1, the aerosol generating device 1 may further include a power conversion circuit (e.g., a DC/DC converter) that converts power of the power source 12 and supplies the converted power to the cartridge heater 15 and/or the heater 15. In addition, when the aerosol generating device 1 generates an aerosol by an induction heating method, the aerosol generating device 1 may further include a DC/AC converter that converts DC power of the power source 12 into AC power.

The controller 13, the sensor 14, the output unit 40, the input unit 70, the communicator 50, and the memory 60 may be supplied with power from the power source 12 to perform functions. Although not shown in FIG. 1, the aerosol generating device 1 may further include a power conversion circuit that converts power of the power source 12 and supplies the power to each of components, e.g., a low-dropout (LDO) circuit or a voltage regulator circuit. Also, although not shown in FIG. 1, a noise filter may be provided between the power source 12 and the heater 15. The noise filter may be a low pass filter. The low pass filter may include at least one inductor and a capacitor. A cutoff frequency of the low pass filter may correspond to a frequency of a high-frequency switching current applied from the power source 12 to the heater 15. The low pass filter may prevent a high-frequency noise component from being applied to the sensor 14, such as the insertion detection sensor 143.

In an embodiment, the cartridge heater 15 and/or the heater 15 may be formed of any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, or nichrome, but is not limited thereto. In addition, the heater 15 may be implemented by a metal wire, a metal plate on which an electrically conductive track is arranged, or a ceramic heating element, but is not limited thereto.

In an embodiment, the heater 15 may include an induction heater. For example, the heater 15 may include a susceptor that generates heat through a magnetic field applied by a coil to heat an aerosol generating material.

The input unit 70 may receive information input from the user or output the information to the user. For example, the input unit 70 may be a touch panel. The touch panel may include at least one touch sensor for detecting a touch. For example, the touch sensor may include a capacitive touch sensor, a resistive touch sensor, a surface acoustic touch sensor, an infrared touch sensor, or the like, but is not limited thereto.

The display 41 and the touch panel may be implemented as one panel. For example, the touch panel may be inserted into the display 41 (e.g., may be a on-cell type or in-cell type). For example, the touch panel may be added on the display 41 (e.g., may be an add-on type).

Meanwhile, the input unit 70 may include a button, a keypad, a dome switch, a jog wheel, a jog switch, or the like, but is not limited thereto.

The memory 60 may be hardware for storing various types of data processed within the aerosol generating device 1 and may store pieces of data processed by the controller 13 and pieces of data to be processed by the controller 13. The memory 60 may include at least one type of storage medium from among a flash memory type, a hard disk type, a multimedia card micro type, a card type memory (e.g., a SD or XD memory or the like), random access memory (RAM), static random access memory (SRAM), read-only memory (ROM), electrically erasable programmable read-only memory (EEPROM), programmable read-only memory (PROM), a magnetic memory, a magnetic disk, and an optical disk. The memory 60 may store data or the like regarding an operation time of the aerosol generating device 1, the maximum number of puffs, the current number of puffs, at least one temperature profile, and a smoking pattern of the user.

The communicator 50 may include at least one component for communication with another electronic device. For example, the communicator 50 may include at least one of a short-range wireless communication unit and a wireless communication unit.

The short-range wireless communication unit may include a Bluetooth communication unit, a Bluetooth low energy (BLE) communication unit, a near field communication unit, a wireless local area network ((WLAN) (Wi-Fi)) communication unit, a Zigbee communication unit, an infrared data association (IrDA) communication unit, a Wi-Fi Direct (WFD) communication unit, an ultra wideband (UWB) communication unit, an Ant+ communication unit, and the like, but is not limited thereto.

The wireless communication unit may include a cellular network communication unit, an Internet communication unit, a computer network (e.g., LAN or WAN) communication unit, and the like, but is not limited thereto.

Although not shown in FIG. 1, the aerosol generating device 1 may further include a connection interface such as a universal serial bus (USB) interface, and may connect with another external device through the connection interface such as a USB interface to transmit and receive information or charge the power 11.

The controller 13 may control an overall operation of the aerosol generating device 1. In an embodiment, the controller 13 may include at least one processor. The processor may be implemented as an array of a plurality of logic gates or may be implemented as a combination of a general-purpose microprocessor and a memory that stores a program executable by the microprocessor. In addition, one of ordinary skill in the art to which the present embodiment pertains may understand that the processor may be implemented as other types of hardware.

The controller 13 may control the temperature of the heater 15 by controlling supply power from the power source 12 to the heater 15. The controller 13 may control the temperature of the cartridge heater 15 and/or the heater 15 on the basis of the temperature of the cartridge heater 15 and/or the heater 15 sensed by the temperature sensor 141. The controller 13 may adjust power supplied to the cartridge heater 15 and/or the heater 15, on the basis of the temperature of the cartridge heater 15 and/or the heater 15. For example, the controller 13 may determine a target temperature for the cartridge heater 15 and/or the heater 15, on the basis of a temperature profile stored in the memory 60.

The aerosol generating device 1 may include a power supply circuit (not shown) electrically connected to the power source 12 between the power source 12 and the cartridge heater 15 and/or the heater 15. The power supply circuit may be electrically connected to the cartridge heater 15, the heater 15, or an induction coil. The power supply circuit may include at least one switching element. The switching element may be implemented by a bipolar junction transistor (BJT), a field effective transistor (FET), or the like. The controller 13 may control the power supply circuit.

The controller 13 may control power supply by controlling switching of the switching element of the power supply circuit. The power supply circuit may be an inverter that converts DC power output from the power source 12 into AC power. For example, the inverter may include a full-bridge circuit or a half-bridge circuit including a plurality of switching elements.

The controller 13 may turn on the switching element so that power is supplied from the power source 12 to the cartridge heater 15 and/or the heater 15. The controller 13 may turn off the switching element to cut off the supply of power to the cartridge heater 15 and/or the heater 15. The controller 13 may adjust a current supplied from the power source 12 by adjusting a frequency and/or duty ratio of a current pulse input into the switching element.

The controller 13 may control a voltage output from the power source 12 by controlling switching of the switching element of the power supply circuit. The power conversion circuit may convert the voltage output from the power source 12. For example, the power conversion circuit may include a buck-converter that steps down the voltage output from the power source 12. For example, the power conversion circuit may be implemented through a buck-boost converter, a zener diode, or the like.

The controller 13 may adjust a level of the voltage output from the power conversion circuit by controlling an on/off operation of the switching element included in the power conversion circuit. When the switching element continues to be turned on, the level of the voltage output from the power conversion circuit may correspond to a level of a voltage output from the power source 12. The duty ratio for the on/off operation of the switching element may correspond to a ratio of the voltage output from the power conversion circuit to the voltage output from the power source 12. The level of the voltage output from the power conversion circuit may decrease with a decrease in the duty ratio for the on/off operation of the switching element. The heater 15 may be heated on the basis of the voltage output from the power conversion circuit.

The controller 13 may control power to be supplied to the heater 15 by using at least one of a pulse width modulation (PWM) method and a proportional-integral-differential (PID) method.

For example, the controller 13 may control a current pulse having a certain frequency and duty ratio to be supplied to the heater 15 by using the PWM method. The controller 13 may control the power supplied to the heater 15 by adjusting the frequency and duty ratio of the current pulse.

For example, the controller 13 may determine a target temperature to be controlled, on the basis of the temperature profile. The controller 13 may control the power supplied to the heater 15 by using the PID method, which is a feedback control method through a difference value between the temperature of the heater 15 and the target temperature, a value obtained by integrating the difference value over time, and a value obtained by differentiating the difference value over time.

The controller 13 may prevent the cartridge heater 15 and/or the heater 15 from overheating. For example, on the basis that the temperature of the cartridge heater 15 and/or the heater 15 exceeds a preset limit temperature, the controller 13 may control an operation of the power conversion circuit so that the supply of power to the cartridge heater 15 and/or the heater 15 stops. For example, on the basis that the temperature of the cartridge heater 15 and/or the heater 15 exceeds the preset limit temperature, the controller 13 may reduce an amount of power supplied to the cartridge heater 15 and/or the heater 15 by a certain ratio. For example, on the basis that the temperature of the cartridge heater 15 exceeds the preset limit temperature, the controller 13 may determine that the aerosol generating material accommodated in the cartridge 19 is exhausted and cut off the power supply to the cartridge heater 15.

The controller 13 may control charging and discharging of the power source 12. The controller 13 may identify the temperature of the power source 12 on the basis of an output signal of the temperature sensor 141.

When a power line is connected to a battery terminal of the aerosol generating device 1, the controller 13 may identify whether or not the temperature of the power source 12 is a first limit temperature or more which is a reference for blocking charging of the power source 12. When the temperature of the power source 12 is less than the first limit temperature, the controller 13 may control the power source 12 to be charged, on the basis of a preset charging current. The controller 13 may block charging of the power source 12 when the temperature of the power source 12 is the first limit temperature or more.

While the power of the aerosol generating device 1 is turned on, the controller 13 may identify whether or not the temperature of the power source 12 is a second limit temperature or more which is a reference for blocking discharge of the power source 12. The controller 13 may control power stored in the power source 12 to be used when the temperature of the power source 12 is less than the second limit temperature. When the temperature of the power source 12 is the second limit temperature or more, the controller 13 may stop using the power stored in the power source 12.

The controller 13 may calculate a remaining capacity of the power stored in the power source 12. For example, the controller 13 may calculate the remaining capacity of the power source 12 on the basis of a voltage and/or current sensing value of the power source 12.

The controller 13 may determine, through the insertion detection sensor 143, whether or not the stick S is inserted into the insertion space. The controller 13 may determine that the stick S is inserted, on the basis of the output signal of the insertion detection sensor 143. When determining that the stick S is inserted into the insertion space, the controller 13 may control power to be supplied to the cartridge heater 15 and/or the heater 15. For example, the controller 13 may supply power to the cartridge heater 15 and/or the heater 15, on the basis of the temperature profile stored in the memory 60.

The controller 13 may determine whether or not the stick S is removed from the insertion space. For example, the controller 13 may determine, through the insertion detection sensor 143, whether or not the stick S is removed from the insertion space. For example, when the temperature of the heater 15 is the preset limit temperature or more or when a temperature change gradient of the heater 15 is a set gradient, the controller 13 may determine that the stick S is removed from the insertion space. When determining that the stick S is removed from the insertion space, the controller 13 may cut off the supply of power to the cartridge heater 15 and/or the heater 15.

The controller 13 may control a power supply time and/or a power supply amount with respect to the heater 15, according to a state of the stick S detected by the sensor 14. The controller 13 may identify, on the basis of a look-up table, a level range including a level of a signal of the capacitance sensor. The controller 13 may determine an amount of moisture in the stick S, according to the identified level range.

When the stick S is over-humidified, the controller 13 may increase a preheating time of the stick S compared to a normal state by controlling the power supply time with respect to the heater 15.

The controller 13 may determine, through the reuse detection sensor 144, whether or not the stick S inserted into the insertion space is reused. For example, the controller 13 may compare a sensing value of a signal of the reuse detection sensor 144 with a first reference range including a first color and when the sensing value is included in the first reference range, determine that the stick S is not used. For example, the controller 13 may compare the sensing value of the signal of the reuse detection sensor 144 with a second reference range including a second color and when the sensing value is included in the second reference range, determine that the stick S is used. When determining that the stick S is used, the controller 13 may cut off the supply of power to the cartridge heater 15 and/or the heater 15.

The controller 13 may determine, through the cartridge detection sensor 145, whether or not the cartridge 19 is coupled and/or removed. For example, the controller 13 may determine whether or not the cartridge 19 is coupled or removed, on the basis of a sensing value of the signal of the cartridge detection sensor 145.

The controller 13 may determine whether or not the aerosol generating material of the cartridge 19 is exhausted. For example, the controller 13 may apply power to preheat the cartridge heater 15 and/or the heater 15, determine whether or not the temperature of the cartridge heater 15 exceeds the limit temperature in a preheating period, and when the temperature of the cartridge heater 15 exceeds the limit temperature, determine that the aerosol generating material of the cartridge 19 is exhausted. When determining that the aerosol generating material of the cartridge 19 is exhausted, the controller 13 may cut off the supply of power to the cartridge heater 15 and/or the heater 15.

The controller 13 may determine whether or not the cartridge 19 may be usable. When the current number of puffs is greater than or equal to the maximum number of puffs set in the cartridge 19, the controller 13 may determine, on the basis of data stored in the memory 60, that the cartridge 19 may not be usable. For example, when the total time for which the heater 15 is heated is a preset maximum time or more or the total amount of power supplied to the heater 15 is a preset maximum amount of power or more, the controller 13 may determine that the cartridge 19 may not be usable.

The controller 13 may determine inhalation by the user through the puff sensor 142. For example, the controller 13 may determine whether or not a puff occurs, on the basis of a sensing value of a signal of the puff sensor 142. For example, the controller 13 may determine an intensity of the puff, on the basis of the sensing value of the signal of the puff sensor 142. When the number of puffs reaches the preset maximum number of puffs or when puffs are not detected for a preset time or more, the controller 13 may cut off the supply of power to the cartridge heater 15 and/or the heater 15.

The controller 13 may determine, through the cap detection sensor 146, whether a cap is coupled and/or removed. For example, the controller 13 may determine whether or not the cap is coupled and/or removed, on the basis of a sensing value of a signal of the cap detection sensor 146.

The controller 13 may control the output unit 40 on the basis of the result of detection by the sensor 14. For example, when the number of puffs counted through the puff sensor 142 reaches a preset number, the controller 13 may notify the user that the aerosol generating device 1 is soon terminated, through at least one of the display 41, the haptic unit 42, and the sound output unit 43. For example, the controller 13 may notify the user through the output unit 40 that the stick S is not present in the insertion space, on the basis of the determination that the stick S is not present in the insertion space. For example, the controller 13 may notify the user through the output unit 40 that the cartridge 19 and/or the cap are not mounted, on the basis of the determination that the cartridge 19 and/or the cap are not mounted. For example, the controller 13 may transmit information regarding the temperature of the cartridge heater 15 and/or the heater 15 to the user through the output unit 40.

The controller 13 may store and update, in the memory 60, a history of a certain event that occurs, on the basis of the occurrence of the event. The event may include detection of insertion of the stick S, initiation of heating of the stick S, detection of puffs, termination of the puffs, detection of overheating of the cartridge heater 15 and/or the heater 15, detection of application of an overvoltage to the cartridge heater 15 and/or the heater 15, termination of heating of the stick S, an operation such as power on/off of the aerosol generating device 1, initiation of charging of the power source 12, detection of overcharging of the power source 12, termination of charging of the power source 12, and the like. The history of the event may include a date and time when the event occurs, log data corresponding to the event, and the like. For example, when the certain event is the detection of insertion of the stick S, the log data corresponding to the event may include data regarding the sensing value of the insertion detection sensor 143 and the like. For example, when the certain event is the detection of overheating of the cartridge heater 15 and/or the heater 15, the log data corresponding to the event may include data regarding the temperature of the cartridge heater 15 and/or the heater 15, the voltage applied to the cartridge heater 15 and/or the heater 15, a current flowing through the cartridge heater 15 and/or the heater 15, and the like.

The controller 13 may control to form a communication link with an external device such as a mobile terminal of the user. When data regarding authentication is received from the external device through the communication link, the controller 13 may release a restriction on use of at least one function of the aerosol generating device 1. Here, the data regarding the authentication may include data indicating completion of user authentication for the user corresponding to the external device. The user may perform the user authentication through the external device. The external device may determine whether or not user data is valid, on the basis of the birthday of the user, a unique number indicating the user, and the like and receive, from an external server, data regarding use authority over the aerosol generating device 1. The external device may transmit the data indicating the completion of the user authentication to the aerosol generating device 1, on the basis of the data regarding the use authority. When the user authentication is completed, the controller 13 may release the restriction on the use of at least one function of the aerosol generating device 1. For example, when the user authentication is completed, the controller 13 may release a restriction on use of a heating function of supplying power to the heater 15.

The controller 13 may transmit data regarding the state of the aerosol generating device 1 to the external device through the communication link formed with the external device. On the basis of the received data regarding the state of the aerosol generating device 1, the external device may output the remaining capacity of the power source 12 of the aerosol generating device 1, an operation mode, and the like through a display of the external device.

The external device may transmit a location search request to the aerosol generating device 1, on the basis of an input for initiating a location search of the aerosol generating device 1. When receiving the location search request from the external device, the controller 13 may control at least one of output devices to perform an operation corresponding to the location search, on the basis of the received location search request. For example, the haptic unit 42 may generate vibration in response to the location search request. For example, the display 41 may output an object corresponding to the location search and an end of the search in response to the location search request.

When receiving firmware data from the external device, the controller 13 may control to perform a firmware update. The external device may identify a current version of firmware of the aerosol generating device 1 and determine whether or not a new version of the firmware is present. When an input for requesting firmware download is received, the external device may receive a new version of firmware data and transmit the new version of firmware data to the aerosol generating device 1. When receiving the new version of firmware data, the controller 13 may control the firmware update of the aerosol generating device 1 to be performed.

The controller 13 may transmit data regarding a sensing value of at least one sensor 14 to the external server (not shown) through the communicator 50, and receive from the server and store a learning model generated by learning the sensing value through machine learning such as deep learning. The controller 13 may perform an operation of determining an inhalation pattern of the user, an operation of generating a temperature profile, and the like by using the learning model received from the server. The controller 13 may store, in the memory 60, sensing value data of at least one sensor 14, data for training an artificial neural network (ANN), and the like. For example, the memory 60 may store a database for each component provided in the aerosol generating device 1, which is for training the ANN, and weights and biases constituting the structure of the ANN. The controller 13 may generate at least one learning model used for determining the inhalation pattern of the user, generating the temperature profile, and the like, by learning data regarding the sensing value of the at least one sensor 14, the inhalation pattern of the user, the temperature profile, and the like which are stored in the memory 60.

Any of the embodiments or other embodiments of the present disclosure described above are not mutually exclusive or distinct. Any of the embodiments or other embodiments of the present disclosure described above may be combined or combined in their respective configurations or functions.

For example, it means that the A configuration described in a specific embodiment and/or the drawings and the B configuration described in another embodiment and/or the drawings may be combined. That is, even if the combination between the configurations is not directly described, it means that the combination is possible, except in cases where the combination is described as impossible.

The above detailed description should not be construed as limiting in all respects, but should be considered as illustrative. The scope of the present disclosure should be determined by a reasonable interpretation of the appended claims, and all changes within the equivalent scope of the present disclosure are included in the scope of the present disclosure.

## Claims

1. An aerosol generating device comprising:
a main body comprising a battery accommodation space;
a battery detachably coupled to the battery accommodation space;
a first terminal arranged in the battery accommodation space, the first terminal being electrically connected to the battery when the battery is coupled to the battery accommodation space; and
a first sealing member arranged to surround the first terminal and configured to prevent introduction of external impurities into the first terminal,
wherein the battery comprises a battery terminal and a battery sealing member, the battery terminal being in contact with the first terminal and the battery sealing member surrounding the battery terminal,
the first sealing member comprises a movable first cover, and
the battery sealing member comprises a movable second cover.

2. The aerosol generating device of claim 1, wherein the first cover is arranged to close the first sealing member at a first position and open the first sealing member at a second position to expose the first terminal.

3. The aerosol generating device of claim 1, wherein the second cover is arranged to close the battery sealing member at a first position and open the battery sealing member at a second position to expose the first terminal.

4. The aerosol generating device of claim 1, further comprising a battery cover arranged at an area of the main body and configured to open or close the battery accommodation space.

5. The aerosol generating device of claim 4, wherein the battery cover comprises:
an external battery cover forming an external surface of the battery cover;
an internal battery cover formed at a center of an internal surface of the battery cover, the internal battery cover configured to pressurize the battery toward the main body when the battery is coupled to the battery accommodation space; and
a protrusion arranged along an edge of the internal surface of the battery cover.

6. The aerosol generating device of claim 5, wherein the main body further comprises a groove into which the protrusion is inserted when the battery cover is coupled to the main body.

7. The aerosol generating device of claim 6, wherein the main body further comprises an elastic member located between the protrusion and the groove when the protrusion is coupled to the groove, the elastic member being configured to prevent introduction of external impurities into the battery accommodation space.

8. The aerosol generating device of claim 1, further comprising a heater configured to heat an aerosol generating material,
wherein the main body further comprises a second terminal and a second sealing member, the second terminal being electrically connected to the heater and the second sealing member being arranged to surround the second terminal and configured to prevent introduction of external impurities into the second terminal.

9. The aerosol generating device of claim 8, wherein the second sealing member comprises a movable third cover.

10. The aerosol generating device of claim 9, wherein the third cover is arranged to close the second sealing member at a first position and open the second sealing member at a second position to expose the second terminal.

11. The aerosol generating device of claim 8, wherein the heater comprises a heater terminal and a heater sealing member, the heater terminal being in contact with the second terminal and the heater sealing member surrounding the heater terminal.

12. The aerosol generating device of claim 11, wherein the heater sealing member comprises a movable cover.
